(19) **Europäisches Patentamt / European Patent Office / Office européen des brevets**

(11) **EP 2 950 213 B1**

(12) **EUROPEAN PATENT SPECIFICATION**

(45) Date of publication and mention of the grant of the patent:
**29.05.2019 Bulletin 2019/22**

(51) Int Cl.:
***G06F 9/50*** (2006.01)

(21) Application number: **15169839.6**

(22) Date of filing: **29.05.2015**

(54) **METHOD, APPARATUS, AND SYSTEM FOR MIGRATING VIRTUAL MACHINE**

VERFAHREN, VORRICHTUNG UND SYSTEM ZUR MIGRATION EINER VIRTUELLEN MASCHINE

PROCEDE, APPAREIL ET SYSTEME DE MIGRATION DE MACHINE VIRTUELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 CN 201410240277**

(43) Date of publication of application:
**02.12.2015 Bulletin 2015/49**

(73) Proprietor: **Huawei Technologies Co., Ltd.**
**Longgang District**
**Shenzhen, Guangdong 518129 (CN)**

(72) Inventors:
• **SONG, Ying**
**518129 Shenzhen (CN)**
• **SUN, Yuzhong**
**518129 Shenzhen (CN)**
• **ZHAO, Xia**
**518129 Shenzhen (CN)**
• **KANG, Kai**
**518129 Shenzhen (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**EP-A1- 2 560 098       EP-A1- 2 631 799**
**WO-A1-2009/126154    US-A1- 2013 174 145**

**Description**

**TECHNICAL FIELD**

The present invention relates to the field of data center technologies, and in particular, to a method, an apparatus, and a system for migrating a virtual machine.

**BACKGROUND**

With rapid development of network technologies, a scale of a data center tends to increase rapidly. Improper design of and an improper operation on the data center may lead to overtemperature of the data center, and the overtemperature of the data center may lead to an increase in a fault probability of a server in the data center. Therefore, reducing temperature of the data center is one of the key problems to be resolved for the data center.

Currently, a refrigeration manner is generally used to reduce the temperature of the data center. However, energy consumed in this refrigeration process is mainly related to a largest temperature value of the server, but temperature distribution of servers in the current data center is unbalanced, which leads to relatively large energy consumption in the refrigeration process. Therefore, the current refrigeration manner has a defect of relatively large energy consumption.

WO 2009/126154 A1 discloses virtual machine migration according to environmental data. Embodiments are directed to virtual machine migration according to environmental data in a data center. One embodiment is a method that analyzes environmental data for a data center having plural servers and migrates virtual machines among the servers to increase cooling efficiency in the data center.

**SUMMARY**

Embodiments of the present invention provide a method, an apparatus, and a system for migrating a virtual machine, to resolve a problem of large energy consumption in a refrigeration process in the prior art.
Specific technical solutions provided in the embodiments of the present invention are as follows:
According to a first aspect, a method for migrating a virtual machine is provided, including:

　　　acquiring a temperature value of each server in a data center at a current time;
　　　determining a largest temperature value and a smallest temperature value from the acquired temperature values of the servers in the data center, and calculating a difference between the largest temperature value and the smallest temperature value;
　　　when it is determined that the difference reaches a preset threshold, determining a to-be-migrated virtual machine from a server with the largest temperature value at the current time, where the preset threshold is greater than 0;
　　　from the other servers that are comprised in the data center except the server with the largest temperature value at the current time, selecting by means of screening a server that does not comprise a virtual machine mutually exclusive with the determined to-be-migrated virtual machine, and/or selecting by means of screening a server that has an idle resource and meets a resource requirement of the determined to-be-migrated virtual machine;
　　　performing the following steps, which are performed on a first server, on each server in selected servers, wherein the first server is any server in the selected servers:

　　　　　predicting temperature values of the first server and the server with the largest temperature value at the current time after the determined to-be-migrated virtual machine is migrated to the first server;
　　　　　calculating a difference between a largest temperature value and a smallest temperature value in the following temperature values: the predicted temperature value of the first server and the predicted temperature value of the server with the largest temperature value at the current time after the determined to-be-migrated virtual machine is migrated to the first server, and measured temperature values obtained by separately measuring other servers in the data center except the first server and the server with the largest temperature value at the current time;
　　　　　determining a server corresponding to a smallest difference, from a calculated difference corresponding to each server in the selected servers, as the selected destination server, where the selected destination server meets the following condition: after the determined to-be-migrated virtual machine is migrated to the destination server, a temperature value of the destination server is less than the largest temperature value; and
　　　　　migrating the determined to-be-migrated virtual machine to the destination server.

With reference to the first aspect, in a first possible implementation manner, the determining a to-be-migrated virtual machine from a server with the largest temperature value at the current time specifically includes:

calculating a value of temperature effect exerted on the server with the largest temperature value at the current time by each virtual machine in the server with the largest temperature value at the current time, where the value of temperature effect exerted on the server with the largest temperature value at the current time by each virtual machine is a temperature value variation of the server with the largest temperature value at the current time when each virtual machine runs in the server with the largest temperature value at the current time;

determining a largest value of temperature effect from the calculated values of temperature effect exerted on the server with the largest temperature value at the current time separately by all virtual machines; and

using a virtual machine with the determined largest value of temperature effect as the determined to-be-migrated virtual machine.

With reference to the first possible implementation manner of the first aspect, in a second possible implementation manner, the calculating a value of temperature effect exerted on the server with the largest temperature value at the current time by each virtual machine in the server with the largest temperature value at the current time includes:

acquiring first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value;

acquiring a first use rate of a specified hardware device of the server with the largest temperature value at the current time, where the first use rate is specific to each virtual machine in the server with the largest temperature value at the current time, the first use rate is collected at the previous sampling time point adjacent to the current time, and the specified hardware device has an attribute that heat is generated and the generated heat changes with load of the specified hardware device;

acquiring a second use rate of the specified hardware device of the server with the largest temperature value at the current time, where the second use rate is collected at each sampling time point in first specified duration previous to the current time;

based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predicting, by using a weighted summing manner, a temperature value of the server with the largest temperature value at the current time available after each virtual machine in the server with the largest temperature value at the current time is migrated out from the server with the largest temperature value at the current time; and

performing the following step, which is performed on a first virtual machine, on each virtual machine in the server with the largest temperature value at the current time, where the first virtual machine is any virtual machine in all virtual machines in the server with the largest temperature value at the current time:

using an absolute value of a temperature difference between a predicted temperature value and the acquired first air outlet temperature as a value of temperature effect exerted on the server with the largest temperature value at the current time by the first virtual machine, where the predicted temperature value is a temperature value of the server with the largest temperature value at the current time after the first virtual machine is migrated out from the server with the largest temperature value at the current time.

With reference to the second possible implementation manner of the first aspect, in a third possible implementation manner, the predicting a temperature value of the server with the largest temperature value at the current time available after each virtual machine in the server with the largest temperature value at the current time is migrated out from the server with the largest temperature value at the current time includes:

performing the following steps, which are performed on the first virtual machine, on each virtual machine in the server with the largest temperature value at the current time:

obtaining a first product by multiplying the acquired first air outlet temperature by the determined weighted value of the first air outlet temperature;

obtaining a second product by multiplying the acquired first air inlet temperature by the determined weighted value of the first air inlet temperature;

obtaining a third product by multiplying the acquired first use rate by the determined weighted value of the first use rate;

obtaining a fourth product by multiplying the acquired second use rate by the determined weighted value of the second use rate; and

adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

With reference to the second or the third possible implementation manner of the first aspect, in a fourth possible implementation manner, the determining a weighted value of the first air vent temperature, a weighted value of the first air inlet temperature, a weighted value of the first use rate, a weighted value of the second use rate, and an ambient temperature includes:

acquiring second air outlet temperature obtained by collecting, at each sampling time point in a period of time previous to the current time, the temperature at the air outlet of the server with the largest temperature value at the current time;

acquiring third air outlet temperature obtained by collecting, at a specified time point corresponding to each sampling time point, the temperature at the air outlet of the server with the largest temperature value at the current time;

acquiring second air inlet temperature obtained by collecting, at the specified time point corresponding to each sampling time point, the temperature at the air inlet of the server with the largest temperature value at the current time;

acquiring a third use rate of the specified hardware device of the server with the largest temperature value at the current time, where the third use rate is specific to each virtual machine in the server with the largest temperature value at the current time, and the third use rate is collected at the specified time point corresponding to each sampling time point;

acquiring a fourth use rate of the specified hardware device of the server with the largest temperature value at the current time, where the fourth use rate is collected in second specified duration corresponding to each sampling time point; and

using the acquired second air outlet temperature as a dependent variable, separately using the acquired third air outlet temperature, second air inlet temperature, third use rate, and fourth use rate as an independent variable, and determining, by using the weighted summing manner, the weighted value of the first air outlet temperature, the weighted value of the first air inlet temperature, the weighted value of the first use rate, the weighted value of the second use rate, and the ambient temperature value, where:

the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

With reference to the first aspect, in a fifth possible implementation manner, the predicting a temperature value of the first server available after the determined to-be-migrated virtual machine is migrated to the first server includes:

acquiring fourth air outlet temperature obtained by collecting temperature at an air outlet of the first server at the previous sampling time point adjacent to the current time;

acquiring third air inlet temperature obtained by collecting temperature at an air inlet of the first server at the previous sampling time point adjacent to the current time;

acquiring a first use rate of the specified hardware device of the server with the largest temperature value at the current time, where the first use rate is specific to the determined to-be-migrated virtual machine, and the first use rate is collected at the previous sampling time point adjacent to the current time;

acquiring first total storage space of the server with the largest temperature value at the current time, and acquiring second total storage space of the first server;

acquiring a fifth use rate of a specified hardware device of the first server, where the fifth use rate is collected at each sampling time point that is previous to the current time and in the first specified duration;

obtaining a fifth product by multiplying the acquired fourth air outlet temperature by the determined weighted value of the first air outlet temperature;

obtaining a sixth product by multiplying the acquired third air inlet temperature by the determined weighted value of the first air inlet temperature;

obtaining a seventh product by multiplying a product of the acquired first use rate and the determined weighted value of the first use rate by a ratio of the acquired second total storage space to the first total storage space;

obtaining an eighth product by multiplying the acquired fifth use rate by the determined weighted value of the second use rate; and

adding the fifth product, the sixth product, the seventh product, the eighth product, and the determined ambient temperature value, and using the sum obtained by the adding as the predicted temperature value of the first server available after the determined to-be-migrated virtual machine is migrated to the first server.

With reference to the first aspect, in a sixth possible implementation manner, the predicting a temperature value of the server with the largest temperature value at the current time after the determined to-be-migrated virtual machine is migrated from the server with the largest temperature value at the current time to the first server includes:

acquiring the first air outlet temperature obtained by collecting, at the previous sampling time point adjacent to the current time, the temperature at the air outlet of the server with the largest temperature value at the current time;

acquiring the first air inlet temperature obtained by collecting, at the previous sampling time point adjacent to the current time, the temperature at the air inlet of the server with the largest temperature value at the current time;

acquiring the first use rate of the specified hardware device of the server with the largest temperature value at the current time, where the first use rate is specific to the determined to-be-migrated virtual machine, and the first use rate is collected at the previous sampling time point adjacent to the current time;

acquiring the second use rate of the specified hardware device of the server with the largest temperature value at the current time, where the second use rate is collected at each sampling time point that is previous to the current time and in the first specified duration;

obtaining the first product by multiplying the acquired first air outlet temperature by the determined weighted value of the first air outlet temperature;

obtaining the second product by multiplying the acquired first air inlet temperature by the determined weighted value of the first air inlet temperature;

obtaining the third product by multiplying the acquired first use rate by the determined weighted value of the first use rate;

obtaining the fourth product by multiplying the acquired second use rate by the determined weighted value of the second use rate; and

adding the first product, the second product, the third product, the fourth product, and the determined ambient temperature value, and using the sum obtained by the adding as the predicted temperature value of the server with the largest temperature value at the current time after the determined to-be-migrated virtual machine is migrated from the server with the largest temperature value at the current time to the first server.

According to a second aspect, an apparatus for migrating a virtual machine is provided, including:

an acquiring unit, configured to acquire a temperature value of each server in a data center at a current time;

a calculating unit, configured to: determine a largest temperature value and a smallest temperature value from the acquired temperature values of the servers in the data center, and calculate a difference between the largest temperature value and the smallest temperature value;

a determining unit, configured to determine a to-be-migrated virtual machine from a server with the largest temperature value at the current time when it is determined that the difference reaches a preset threshold, where the preset threshold is greater than or equal to 0;

a selecting unit, configured to:

from the other servers that are comprised in the data center except the server with the largest temperature value at the current time, select by means of screening a server that does not comprise a virtual machine mutually exclusive with the determined to-be-migrated virtual machine, and/or select by means of screening a server that has an idle resource and meets a resource requirement of the determined to-be-migrated virtual machine;

perform the following steps, which are performed on a first server, on each server in the selected servers, wherein the first server is any server in the selected servers:

predicting temperature values of the first server and the server with the largest temperature value at the current time after the determined to-be-migrated virtual machine is migrated to the first server;

calculating a difference between a largest temperature value and a smallest temperature value in the following temperature values: the predicted temperature value of the first server and the predicted temperature value of the server with the largest temperature value at the current time after the determined to-be-migrated virtual machine is migrated to the first server, and measured temperature values obtained by separately measuring other servers in the data center except the first server and the server with the largest temperature value at the current time; and

determining a server corresponding to a smallest difference, from a calculated difference corresponding to each server in the selected servers, as the selected destination server, where the selected destination server meets the following condition: after the determined to-be-migrated virtual machine is migrated to the destination server, a temperature value of the destination server is less than the largest temperature value; and

a migrating unit, configured to migrate the determined to-be-migrated virtual machine to the destination server.

With reference to the second aspect, in a first possible implementation manner, when determining the to-be-migrated virtual machine from the server with the largest temperature value at the current time, the determining unit is specifically configured to:

calculate a value of temperature effect exerted on the server with the largest temperature value at the current time by each virtual machine in the server with the largest temperature value at the current time, where the value of temperature effect exerted on the server with the largest temperature value at the current time by each virtual machine is a temperature value variation of the server with the largest temperature value at the current time when each virtual machine runs in the server with the largest temperature value at the current time;
determine a largest value of temperature effect from the calculated values of temperature effect exerted on the server with the largest temperature value at the current time separately by all virtual machines; and
use a virtual machine with the determined largest value of temperature effect as the determined to-be-migrated virtual machine.

With reference to the first possible implementation manner of the second aspect, in a second possible implementation manner, when calculating the value of temperature effect exerted on the server with the largest temperature value at the current time by each virtual machine in the server with the largest temperature value at the current time, the determining unit is specifically configured to:

acquire first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value;
acquire a first use rate of a specified hardware device of the server with the largest temperature value at the current time, where the first use rate is specific to each virtual machine in the server with the largest temperature value at the current time, the first use rate is collected at the previous sampling time point adjacent to the current time, and the specified hardware device has an attribute that heat is generated and the generated heat changes with load of the specified hardware device;
acquire a second use rate of the specified hardware device of the server with the largest temperature value at the current time, where the second use rate is collected at each sampling time point in first specified duration previous to the current time;
based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predict, by using a weighted summing manner, a temperature value of the server with the largest temperature value at the current time available after each virtual machine in the server with the largest temperature value at the current time is migrated out from the server with the largest temperature value at the current time; and
perform the following step, which is performed on a first virtual machine, on each virtual machine in the server with the largest temperature value at the current time, where the first virtual machine is any virtual machine in all virtual machines in the server with the largest temperature value at the current time:
using an absolute value of a temperature difference between a predicted temperature value and the acquired first air outlet temperature as a value of temperature effect exerted on the server with the largest temperature value at the current time by the first virtual machine, where the predicted temperature value is a temperature value of the server with the largest temperature value at the current time after the first virtual machine is migrated out from the server with the largest temperature value at the current time.

With reference to the second possible implementation manner of the second aspect, in a third possible implementation manner, when predicting, by using the weighted summing manner, the temperature value of the server with the largest temperature value at the current time available after each virtual machine in the server with the largest temperature value at the current time is migrated out from the server with the largest temperature value at the current time, the determining unit is specifically configured to:
perform the following steps, which are performed on the first virtual machine, on each virtual machine in the server with the largest temperature value at the current time:

obtaining a first product by multiplying the acquired first air outlet temperature by the determined weighted value of the first air outlet temperature;
obtaining a second product by multiplying the acquired first air inlet temperature by the determined weighted value of the first air inlet temperature;
obtaining a third product by multiplying the acquired first use rate by the determined weighted value of the first use rate;
obtaining a fourth product by multiplying the acquired second use rate by the determined weighted value of the second use rate; and
adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

With reference to the second or the third possible implementation manner of the second aspect, in a fourth possible implementation manner, when determining the weighted value of the first air vent temperature, the weighted value of the first air inlet temperature, the weighted value of the first use rate, the weighted value of the second use rate, and the ambient temperature value, the determining unit is specifically configured to:

acquire second air outlet temperature obtained by collecting, at each sampling time point in a period of time previous to the current time, the temperature at the air outlet of the server with the largest temperature value at the current time;
acquire third air outlet temperature obtained by collecting, at a specified time point corresponding to each sampling time point, the temperature at the air outlet of the server with the largest temperature value at the current time;
acquire second air inlet temperature obtained by collecting, at the specified time point corresponding to each sampling time point, the temperature at the air inlet of the server with the largest temperature value at the current time;
acquire a third use rate of the specified hardware device of the server with the largest temperature value at the current time, where the third use rate is specific to each virtual machine in the server with the largest temperature value at the current time, and the third use rate is collected at the specified time point corresponding to each sampling time point;
acquire a fourth use rate of the specified hardware device of the server with the largest temperature value at the current time, where the fourth use rate is collected in second specified duration corresponding to each sampling time point; and
use the acquired second air outlet temperature as a dependent variable, separately use the acquired third air outlet temperature, second air inlet temperature, third use rate, and fourth use rate as an independent variable, and determine, by using the weighted summing manner, the weighted value of the first air outlet temperature, the weighted value of the first air inlet temperature, the weighted value of the first use rate, the weighted value of the second use rate, and the ambient temperature value, where:
the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

With reference to the second aspect, in a fifth possible implementation manner, when predicting the temperature value of the first server available after the determined to-be-migrated virtual machine is migrated to the first server, the selecting unit is specifically configured to:

acquire fourth air outlet temperature obtained by collecting temperature at an air outlet of the first server at the previous sampling time point adjacent to the current time;
acquire third air inlet temperature obtained by collecting temperature at an air inlet of the first server at the previous sampling time point adjacent to the current time;
acquire a first use rate of the specified hardware device of the server with the largest temperature value at the current time, where the first use rate is specific to the determined to-be-migrated virtual machine, and the first use rate is collected at the previous sampling time point adjacent to the current time;
acquire first total storage space of the server with the largest temperature value at the current time, and acquire second total storage space of the first server;

acquire a fifth use rate of a specified hardware device of the first server, where the fifth use rate is collected at each sampling time point that is previous to the current time and in the first specified duration;

obtain a fifth product by multiplying the acquired fourth air outlet temperature by the determined weighted value of the first air outlet temperature;

obtain a sixth product by multiplying the acquired third air inlet temperature by the determined weighted value of the first air inlet temperature;

obtain a seventh product by multiplying a product of the acquired first use rate and the determined weighted value of the first use rate by a ratio of the acquired second total storage space to the first total storage space;

obtain an eighth product by multiplying the acquired fifth use rate by the determined weighted value of the second use rate; and

add the fifth product, the sixth product, the seventh product, the eighth product, and the determined ambient temperature value, and use the sum obtained by the adding as the predicted temperature value of the first server available after the determined to-be-migrated virtual machine is migrated to the first server.

With reference to the second aspect, in a sixth possible implementation manner, when predicting the temperature value of the server with the largest temperature value at the current time after the to-be-migrated virtual machine is migrated from the server with the largest temperature value at the current time to the first server, the selecting unit is specifically configured to:

acquire the first air outlet temperature obtained by collecting, at the previous sampling time point adjacent to the current time, the temperature at the air outlet of the server with the largest temperature value at the current time;

acquire the first air inlet temperature obtained by collecting, at the previous sampling time point adjacent to the current time, the temperature at the air inlet of the server with the largest temperature value at the current time;

acquire the first use rate of the specified hardware device of the server with the largest temperature value at the current time, where the first use rate is specific to the determined to-be-migrated virtual machine, and the first use rate is collected at the previous sampling time point adjacent to the current time;

acquire the second use rate of the specified hardware device of the server with the largest temperature value at the current time, where the second use rate is collected at each sampling time point that is previous to the current time and in the first specified duration;

obtain the first product by multiplying the acquired first air outlet temperature by the determined weighted value of the first air outlet temperature;

obtain the second product by multiplying the acquired first air inlet temperature by the determined weighted value of the first air inlet temperature;

obtain the third product by multiplying the acquired first use rate by the determined weighted value of the first use rate;

obtain the fourth product by multiplying the acquired second use rate by the determined weighted value of the second use rate; and

add the first product, the second product, the third product, the fourth product, and the determined ambient temperature value, and use the sum obtained by the adding as the predicted temperature value of the server with the largest temperature value at the current time after the determined to-be-migrated virtual machine is migrated from the server with the largest temperature value at the current time to the first server.

According to a third aspect, a system for migrating a virtual machine is provided, including a data center, where the data center includes at least one server, and each server in the at least one server includes at least one virtual machine; further including the apparatus for migrating a virtual machine according to the second aspect, or any possible implementation manner in the first possible implementation manner of the second aspect to the sixth possible implementation manner of the second aspect.

Beneficial effects of the present invention are as follows:

In the prior art, a refrigeration manner is generally used at the time of reducing temperature of a data center, and energy consumed in the refrigeration manner is closely related to a largest temperature value of a server in the data center. However, temperature distribution of each server in the current data center is unbalanced, which leads to relatively large energy consumption in a refrigeration process. Therefore, the current refrigeration manner has a defect of relatively large energy consumption. In embodiments of the present invention, a method for migrating a virtual machine is proposed. In this solution, a to-be-migrated virtual machine is determined from a server with a largest temperature value at a current time, and the to-be-migrated virtual machine is migrated to a destination server. Because a temperature value of the destination server available after the to-be-migrated virtual machine is migrated to the destination server is less than the largest temperature value of the server with the largest temperature value at the current time available before the virtual machine is migrated out from the server with the largest temperature value at the current time, a largest temperature value of a server in a data center is reduced; in addition, during refrigeration, more energy is consumed if the largest temperature value is larger, and less energy is consumed if the largest temperature value is smaller. Therefore, this solution reduces energy consumed in a refrigeration process.

## BRIEF DESCRIPTION OF DRAWINGS

FIG. 1 is a detailed flowchart of migrating a virtual machine according to an embodiment of the present invention;

FIG. 2 is an embodiment of migrating a virtual machine according to an embodiment of the present invention;

FIG. 3 is a schematic functional structural diagram of an apparatus for migrating a virtual machine according to an embodiment of the present invention;

FIG. 4 is a schematic diagram of a system for migrating a virtual machine according to an embodiment of the present invention; and

FIG. 5 is a schematic structural diagram of an entity of an apparatus for migrating a virtual machine according to an embodiment of the present invention.

## DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In embodiments of the present invention, a method for migrating a virtual machine is proposed. In this solution, a to-be-migrated virtual machine is determined from a server with a largest temperature value at a current time, and the to-be-migrated virtual machine is migrated to a destination server. Because a temperature value of the destination server available after the to-be-migrated virtual machine is migrated to the destination server is less than the largest temperature value of the server with the largest temperature value at the current time available before the virtual machine is migrated out from the server with the largest temperature value at the current time, a largest temperature value of a server in a data center is reduced; in addition, during refrigeration, more energy is consumed if the largest temperature value is larger, and less energy is consumed if the largest temperature value is smaller. Therefore, this solution reduces energy consumed in a refrigeration process.

In the following, preferable implementation manners of the present invention are described in detail with reference to the accompanying drawings.

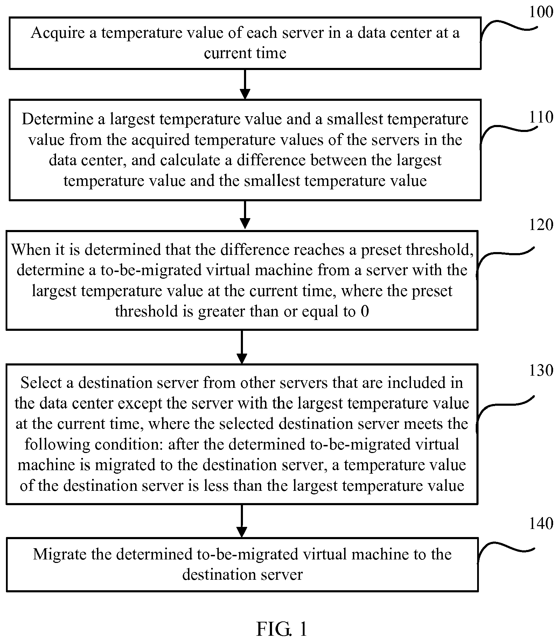

Referring to FIG. 1, an embodiment of the present invention provides a method for migrating a virtual machine. A specific process of the method is as follows:

Step 100: Acquire a temperature value of each server in a data center at a current time.

Step 110: Determine a largest temperature value and a smallest temperature value from the acquired temperature values of the servers in the data center, and calculate a difference between the largest temperature value and the smallest temperature value.

Step 120: When it is determined that the difference reaches a preset threshold, determine a to-be-migrated virtual machine from a server with the largest temperature value at the current time, where the preset threshold is greater than or equal to 0.

Step 130: Select a destination server from other servers that are included in the data center except the server with the largest temperature value at the current time, where the selected destination server meets the following condition: after the determined to-be-migrated virtual machine is migrated to the destination server, a temperature value of the destination server is less than the largest temperature value.

Step 140: Migrate the determined to-be-migrated virtual machine to the destination server.

Embodiment 1

For example, there are 10 servers in a data center: server 1, server 2, ..., and server 10.

Step 1: Acquire temperature values of server 1, server 2, ..., and server 10, and obtain, by means of calculation, a difference 10°C by a largest temperature value 35°C minus a smallest temperature value 25°C.

In this step, a server with the largest temperature value 35°C is server 1.

Step 2: Determine that the difference 10°C is greater than a preset threshold 4°C, and therefore determine a to-be-migrated virtual machine from 10 virtual machines in server 1.

In this step, there are 10 virtual machines in server 1, and the finally determined to-be-migrated virtual machine is virtual machine 1.

Step 3: Select server 10, from server 2, server 3, ..., and server 10, as a destination server to which virtual machine 1 is to be migrated.

Step 4: Migrate virtual machine 1 to server 10.

In this embodiment of the present invention, there are multiple manners of determining the to-be-migrated virtual machine from the server with the largest temperature value at the current time. Optionally, the following manner may be used:

calculating a value of temperature effect exerted on the server with the largest temperature value at the current time by each virtual machine in the server with the largest temperature value at the current time, where the value of temperature effect exerted on the server with the largest temperature value at the current time by each virtual machine is a temperature value variation of the server with the largest temperature value at the current time when each virtual machine runs in the server with the largest temperature value at the current time;

determining a largest value of temperature effect from the calculated values of temperature effect exerted on the server with the largest temperature value at the current time separately by all virtual machines; and

using a virtual machine with the determined largest value of temperature effect as the determined to-be-migrated virtual machine.

Embodiment 1 is still used as an example for description.

For example, values of temperature effect exerted on server 1 separately by the 10 virtual machines in server 1 are calculated. When a value of temperature effect exerted on server 1 by virtual machine 1 is the largest, virtual machine 1 is used as the to-be-migrated virtual machine; likewise, when a value of temperature effect exerted on server 1 by virtual machine 2 is the largest, virtual machine 2 is used as the to-be-migrated virtual machine.

The foregoing is merely one manner of determining the to-be-migrated virtual machine from the server with the largest temperature value at the current time. In actual application, there are multiple implementation manners, and details are not described herein again.

In this embodiment of the present invention, there are multiple manners of calculating the value of temperature effect exerted on the server with the largest temperature value at the current time by each virtual machine in the server with the largest temperature value at the current time. Optionally, the following manner may be used:

acquiring first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value;

acquiring a first use rate of a specified hardware device of the server with the largest temperature value at the current time, where the first use rate is specific to each virtual machine in the server with the largest temperature value at the current time, the first use rate is collected at the previous sampling time point adjacent to the current time, and the specified hardware device has an attribute that heat is generated and the generated heat changes with load of the specified hardware device;

acquiring a second use rate of the specified hardware device of the server with the largest temperature value at the current time, where the second use rate is collected at each sampling time point in first specified duration previous to the current time;

based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predicting, by using a weighted summing manner, a temperature value of the server with the largest temperature value at the current time available after each virtual machine in the server with the largest temperature value at the current time is migrated out from the server with the largest temperature value at the current time; and

performing the following step, which is performed on a first virtual machine, on each virtual machine in the server with the largest temperature value at the current time, where the first virtual machine is any virtual machine in all virtual machines in the server with the largest temperature value at the current time:

using an absolute value of a temperature difference between a predicted temperature value and the acquired first air outlet temperature as a value of temperature effect exerted on the server with the largest temperature value at the current time by the first virtual machine, where the predicted temperature value is a temperature value of the server with the largest temperature value at the current time after the first virtual machine is migrated out from the server with the largest temperature value at the current time.

A main idea of the calculating the value of temperature effect exerted on the server with the largest temperature value at the current time by each virtual machine in the server with the largest temperature value at the current time is as follows:

acquiring air outlet temperature T1 of the server with the largest temperature value at the current time (that is, temperature of the server with the largest temperature value at the current time available before the foregoing virtual machine A is migrated out from the server with the largest temperature value at the current time), and predicting temperature T2 of the server with the largest temperature value at the current time after virtual machine A is migrated out from the server with the largest temperature value at the current time, where in this process, it is assumed that only virtual machine A is migrated out from the server with the largest temperature value at the current time, and then |T1-T2| is a value of temperature effect exerted on the server with the largest temperature value at the current time by virtual machine A.

The air outlet temperature T1 of the server with the largest temperature value at the current time may be collected; the temperature T2 may be predicted according to the air outlet temperature, the air inlet temperature, the first use rate, and the second use rate that are collected, where the temperature T2 is temperature of the server with the largest temperature value at the current time after virtual machine A is migrated out from the server with the largest temperature value at the current time.

In this embodiment of the present invention, there are multiple manners of predicting the temperature value of the server with the largest temperature value at the current time available after each virtual machine in the server with the largest temperature value at the current time is migrated out from the server with the largest temperature value at the current time. Optionally, the following manner may be used:

performing the following steps, which are performed on the first virtual machine, on each virtual machine in the server with the largest temperature value at the current time:

obtaining a first product by multiplying the acquired first air outlet temperature by the determined weighted value of the first air outlet temperature;
obtaining a second product by multiplying the acquired first air inlet temperature by the determined weighted value of the first air inlet temperature;
obtaining a third product by multiplying the acquired first use rate by the determined weighted value of the first use rate;
obtaining a fourth product by multiplying the acquired second use rate by the determined weighted value of the second use rate; and
adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

For example, at the time of predicting temperature T of the server with the largest temperature value at the current time available after virtual machine A is migrated out from server 1 with the largest temperature value at the current time, specifically formula 1 may be used to perform calculation (if the temperature T of server 1 after virtual machine 1 is migrated out from server 1 is to be calculated):

$$T=T0+C1 \times X1+C2 \times X2++C3 \times X3 + C4 \times X4 \text{ (Formula 1)}$$

T0 is an ambient temperature value; X1 is first air outlet temperature obtained by collecting temperature at an air outlet of server 1 at the previous sampling time point adjacent to the current time; X2 is first air inlet temperature obtained by collecting temperature at an air inlet of server 1 at the previous sampling time point adjacent to the current time; X3 is a first use rate of a specified hardware device of server 1, where the first use rate is specific to virtual machine A, and the first use rate is collected at the previous sampling time point adjacent to the current time; X4 is a second use rate of the specified hardware device of server 1, where the second use rate is collected at each sampling time point that is previous to the current time and in the first specified duration; and C1 is a determined weighted value of the first air outlet temperature, C2 is a determined weighted value of the first air inlet temperature, C3 is a determined weighted value of the first use rate, and C4 is a determined weighted value of the second use rate.

In this embodiment of the present invention, there are multiple manners of determining the weighted value of the first air vent temperature, the weighted value of the first air inlet temperature, the weighted value of the first use rate, the weighted value of the second use rate, and the ambient temperature value. Optionally, the following manner may be used:

acquiring second air outlet temperature obtained by collecting, at each sampling time point in a period of time previous to the current time, the temperature at the air outlet of the server with the largest temperature value at the current time;

acquiring third air outlet temperature obtained by collecting, at a specified time point corresponding to each sampling time point, the temperature at the air outlet of the server with the largest temperature value at the current time;

acquiring second air inlet temperature obtained by collecting, at the specified time point corresponding to each sampling time point, the temperature at the air inlet of the server with the largest temperature value at the current time;

acquiring a third use rate of the specified hardware device of the server with the largest temperature value at the current time, where the third use rate is specific to each virtual machine in the server with the largest temperature value at the current time, and the third use rate is collected at the specified time point corresponding to each sampling time point;

acquiring a fourth use rate of the specified hardware device of the server with the largest temperature value at the current time, where the fourth use rate is collected in second specified duration corresponding to each sampling time point; and

using the acquired second air outlet temperature as a dependent variable, separately using the acquired third air outlet temperature, second air inlet temperature, third use rate, and fourth use rate as an independent variable, and determining, by using the weighted summing manner, the weighted value of the first air outlet temperature, the weighted value of the first air inlet temperature, the weighted value of the first use rate, the weighted value of the second use rate, and the ambient temperature value, where:

the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

The foregoing determining process may also be implemented by using formula 1. For any sampling time point in a period of time previous to the current time, formula 1 may be used to construct an equation, and a specific process is as follows (the server with the largest temperature value at the current time is server 1, the virtual machine is virtual machine A, and a sampling time point is sampling time point 1, where there are totally 10 sampling time points):

$$T = T0 + C1 \times X5 + C2 \times X6 + + C3 \times X7 + C4 \times X8$$

T0 is the ambient temperature value; T is acquired second air outlet temperature obtained by collecting the temperature at the air outlet of server 1 at sampling time point 1; X5 is acquired third air outlet temperature obtained by collecting the temperature at the air outlet of server 1 at a specified time point corresponding to sampling time point 1; X6 is acquired second air inlet temperature obtained by collecting the temperature at the air inlet of server 1 at the specified time point corresponding to sampling time point 1; X7 is an acquired third use rate of the specified hardware device of server 1 by virtual machine A in server 1, where the third use rate is collected at the specified time point corresponding to sampling time point 1; X8 is an acquired fourth use rate of the specified hardware device of server 1, where the fourth use rate is collected in second specified duration corresponding to sampling time point 1; and C1 is the weighted value of the first air outlet temperature, C2 is the weighted value of the first air inlet temperature, C3 is the weighted value of the first use rate, and C4 is the weighted value of the second use rate.

The foregoing merely describes an equation constructed according to data acquired at sampling time point 1; likewise, equations may be separately constructed for data acquired at sampling time points 2 to 9; and finally 10 equations are obtained. Then, an equation set consisting of these 10 equations is solved to obtain C1, C2, C3, and C4.

In this embodiment of the present invention, when the equation set is solved, a least square method may be specifically used to solve the equation set.

In this embodiment of the present invention, there are multiple manners of selecting the destination server from the other servers that are included in the data center except the server with the largest temperature value at the current time. Optionally, the following manner may be used:

from the other servers that are included in the data center except the server with the largest temperature value at the current time, selecting by means of screening a server that does not include a virtual machine mutually exclusive with the determined to-be-migrated virtual machine, and/or selecting by means of screening a server that has an idle resource and meets a resource requirement of the determined to-be-migrated virtual machine;

predicting a temperature value of each selected server available after the determined to-be-migrated virtual machine is migrated to each selected server; and

using a server that is in the selected server and whose corresponding predicted temperature value is less than the largest temperature value as the selected destination server.

For example, there are 10 servers in the data center, and the server with the largest temperature value at the current time is server 1. Then, server 6, server 7, server 8, server 9, and server 10 are selected from server 2, server 3, ..., and server 10; and then temperature values of server 6, server 7, server 8, server 9, and server 10 after the determined to-be-migrated virtual machine is separately migrated to server 6, server 7, server 8, server 9, and server 10 are separately predicted, and a server that is in the selected server and whose corresponding predicted temperature value is less than the largest temperature value is used as the selected destination server.

In this embodiment of the present invention, there are multiple manners of using the server that is in the selected server and whose corresponding predicted temperature value is less than the largest temperature value as the selected destination server. Optionally, the following manner may be used:

using any server that is in the selected server and whose temperature value is less than the largest temperature value as the selected destination server.

For example, there are 10 servers in the data center, and the server with the largest temperature value at the current time is server 1. Then, server 6, server 7, server 8, server 9, and server 10 are selected from server 2, server 3, ..., and server 10; and then temperature values of server 6, server 7, server 8, server 9, and server 10 after the determined to-be-migrated virtual machine is separately migrated to server 6, server 7, server 8, server 9, and server 10 are separately predicted, and a server that is in the selected server and whose corresponding predicted temperature value is less than the largest temperature value is used as the selected destination server.

To reduce the number of times of migrating a virtual machine in a process of balancing temperature of servers in the data center, and to reduce resource consumption, further, the following manner may be further used:

performing the following steps, which are performed on a first server, on each server in the selected servers, where the first server is any server in the selected servers:

predicting temperature values of the first server and the server with the largest temperature value at the current time after the determined to-be-migrated virtual machine is migrated to the first server;

calculating a difference between a largest temperature value and a smallest temperature value in: the predicted temperature values corresponding to the first server and the server with the largest temperature value at the current time, and measured temperature values obtained by separately measuring other servers in the data center except the first server and the server with the largest temperature value at the current time; and

from a calculated difference corresponding to each server in the selected servers, determining a server corresponding to a smallest difference as the selected destination server.

For example, there are 10 servers in the data center, and five servers are selected: server 6, server 7, server 8, server 9, and server 10, and then a difference between a largest temperature value and a smallest temperature value in the 10 servers after it is assumed that the to-be-migrated virtual machine 1 is separately migrated to any server in the foregoing five servers. For example, it is assumed that after virtual machine 1 is migrated to server 6, the difference between the largest temperature value and the smallest temperature value in the 10 servers is 10°C; it is assumed that after virtual machine 1 is migrated to server 7, the difference between the largest temperature value and the smallest temperature value in the 10 servers is 8°C; it is assumed that after virtual machine 1 is migrated to server 8, the difference between the largest temperature value and the smallest temperature value in the 10 servers is 4°C; it is assumed that after virtual machine 1 is migrated to server 9, the difference between the largest temperature value and the smallest temperature value in the 10 servers is 9°C; it is assumed that after virtual machine 1 is migrated to server 10, the difference between the largest temperature value and the smallest temperature value in the 10 servers is 2°C, where when the smallest difference is 2°C, it is assumed that virtual machine 1 is migrated to server 10, and in this case, server 10 is used as the destination server.

In this embodiment of the present invention, there are multiple manners of predicting the temperature value of the first server available after the determined to-be-migrated virtual machine is migrated to the first server. Optionally, the following manner may be used:

acquiring fourth air outlet temperature obtained by collecting temperature at an air outlet of the first server at the previous sampling time point adjacent to the current time;

acquiring third air inlet temperature obtained by collecting temperature at an air inlet of the first server at the previous sampling time point adjacent to the current time;

acquiring a first use rate of the specified hardware device of the server with the largest temperature value at the current time, where the first use rate is specific to the determined to-be-migrated virtual machine, and the first use rate is collected at the previous sampling time point adjacent to the current time;

acquiring first total storage space of the server with the largest temperature value at the current time, and acquiring second total storage space of the first server;

acquiring a fifth use rate of a specified hardware device of the first server, where the fifth use rate is collected at each sampling time point that is previous to the current time and in the first specified duration;

obtaining a fifth product by multiplying the acquired fourth air outlet temperature by the determined weighted value of the first air outlet temperature;

obtaining a sixth product by multiplying the acquired third air inlet temperature by the determined weighted value of the first air inlet temperature;

obtaining a seventh product by multiplying a product of the acquired first use rate and the determined weighted value of the first use rate by a ratio of the acquired second total storage space to the first total storage space;

obtaining an eighth product by multiplying the acquired fifth use rate by the determined weighted value of the second use rate; and

adding the fifth product, the sixth product, the seventh product, the eighth product, and the determined ambient temperature value, and using the sum obtained by the adding as the predicted temperature value of the first server available after the determined to-be-migrated virtual machine is migrated to the first server.

In implementation, the predicted temperature value of the first server may be specifically calculated by using formula 1. For example, the server with the largest temperature value at the current time is server 1, and the first server is server 2:

$$T = T_0 + C_1 \times X_9 + C_2 \times X_{10} + + C_3 \times X_{11} \times A_1/A_2 + C_4 \times X_{12}$$

In this case, $T_0$ is the ambient temperature value; $X_9$ is fourth air outlet temperature obtained by collecting temperature at an air outlet of server 2 at the previous sampling time point adjacent to the current time; $X_{10}$ is third air inlet temperature obtained by collecting temperature at an air inlet of server 2 at the previous sampling time point adjacent to the current time; $X_{11}$ is a first use rate of the specified hardware device of server 1 by the determined to-be-migrated virtual machine, where the first use rate is collected at the previous sampling time point adjacent to the current time; $X_{12}$ is a fifth use rate of a specified hardware device of server 2, where the fifth use rate is collected at each sampling time point that is previous to the current time and in the first specified duration; $C_1$ is the weighted value of the first air outlet temperature, $C_2$ is the weighted value of the first air inlet temperature, $C_3$ is the weighted value of the first use rate, and $C_4$ is the weighted value of the second use rate; and $A_1$ is second total storage space of server 2, and $A_2$ is first total storage space of server 1.

In this embodiment of the present invention, there are multiple manners of predicting the temperature value of the server with the largest temperature value at the current time available after the determined to-be-migrated virtual machine is migrated from the server with the largest temperature value at the current time to the first server. Optionally, the following manner may be used:

acquiring the first air outlet temperature obtained by collecting, at the previous sampling time point adjacent to the current time, the temperature at the air outlet of the server with the largest temperature value at the current time;

acquiring the first air inlet temperature obtained by collecting, at the previous sampling time point adjacent to the current time, the temperature at the air inlet of the server with the largest temperature value at the current time;

acquiring the first use rate of the specified hardware device of the server with the largest temperature value at the current time, where the first use rate is specific to the determined to-be-migrated virtual machine, and the first use rate is collected at the previous sampling time point adjacent to the current time;

acquiring the second use rate of the specified hardware device of the server with the largest temperature value at the current time, where the second use rate is collected at each sampling time point that is previous to the current time and in the first specified duration;

obtaining the first product by multiplying the acquired first air outlet temperature by the determined weighted value of the first air outlet temperature;

obtaining the second product by multiplying the acquired first air inlet temperature by the determined weighted value of the first air inlet temperature;

obtaining the third product by multiplying the acquired first use rate by the determined weighted value of the first use rate;

obtaining the fourth product by multiplying the acquired second use rate by the determined weighted value of the second use rate; and

adding the first product, the second product, the third product, the fourth product, and the determined ambient temperature value, and using the sum obtained by the adding as the predicted temperature value of the server with the largest temperature value at the current time after the determined to-be-migrated virtual machine is migrated from the server with the largest temperature value at the current time to the first server.

In this embodiment of the present invention, the hardware device includes a central processing unit, a memory, a disk, and a network; likewise, the first use rate of the hardware device includes a first use rate of the central processing unit, a first use rate of the memory, a first use rate of the disk, and a first use rate of the network.

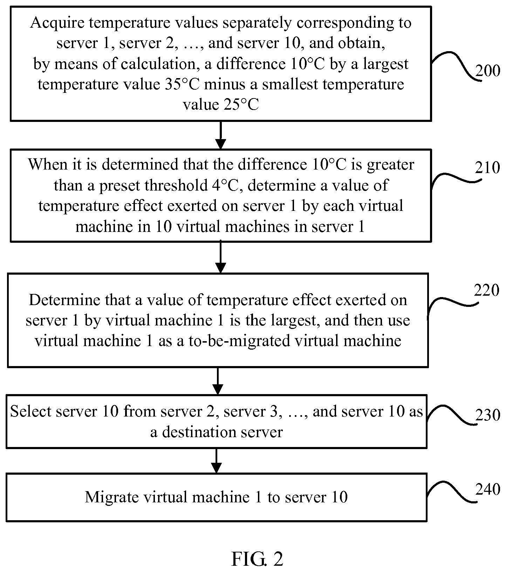

To better understand this embodiment of the present invention, a specific application scenario is provided in the following, and a process of migrating a virtual machine is further described in detail, which is shown in FIG. 2.

There are 10 servers in a data center: server 1, server 2, ..., and server 10.

Step 200: Acquire respective temperature values of server 1, server 2, ..., and server 10, and obtain, by means of calculation, a difference 10°C by a largest temperature value 35°C minus a smallest temperature value 25°C.

In this step, a server with the largest temperature value 35°C is server 1.

Step 210: When it is determined that the difference 10°C is greater than a preset threshold 4°C, determine a value of temperature effect exerted on server 1 by each virtual machine in 10 virtual machines in server 1.

Step 220: Determine that a value of temperature effect exerted on server 1 by virtual machine 1 is the largest, and then use virtual machine 1 as a to-be-migrated virtual machine.

Step 230: Select server 10 from server 2, server 3, ..., and server 10 as a destination server.

Step 240: Migrate virtual machine 1 to server 10.

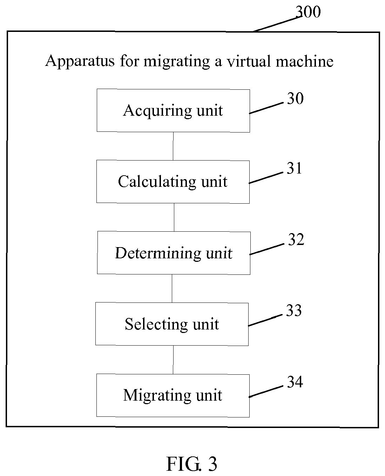

Based on the foregoing technical solution and referring to FIG. 3, an embodiment of the present invention provides an apparatus 300 for migrating a virtual machine, and the apparatus 300 for migrating a virtual machine includes an acquiring unit 30, a calculating unit 31, a determining unit 32, a selecting unit 33, and a migrating unit 34.

The acquiring unit 30 is configured to acquire a temperature value of each server in a data center at a current time.

The calculating unit 31 is configured to: determine a largest temperature value and a smallest temperature value from the acquired temperature values of the servers in the data center, and calculate a difference between the largest temperature value and the smallest temperature value.

The determining unit 32 is configured to determine a to-be-migrated virtual machine from a server with the largest temperature value at the current time when it is determined that the difference reaches a preset threshold, where the preset threshold is greater than or equal to 0.

The selecting unit 33 is configured to select a destination server from other servers that are included in the data center except the server with the largest temperature value at the current time, where the selected destination server meets the following condition: after the determined to-be-migrated virtual machine is migrated to the destination server, a temperature value of the destination server is less than the largest temperature value.

The migrating unit 34 is configured to migrate the determined to-be-migrated virtual machine to the destination server.

In this embodiment of the present invention, optionally, when determining the to-be-migrated virtual machine from the server with the largest temperature value at the current time, the determining unit 32 is specifically configured to:

calculate a value of temperature effect exerted on the server with the largest temperature value at the current time by each virtual machine in the server with the largest temperature value at the current time, where the value of temperature effect exerted on the server with the largest temperature value at the current time by each virtual machine is a temperature value variation of the server with the largest temperature value at the current time when each virtual machine runs in the server with the largest temperature value at the current time;

determine a largest value of temperature effect from the calculated values of temperature effect exerted on the server with the largest temperature value at the current time separately by all virtual machines; and

use a virtual machine with the determined largest value of temperature effect as the determined to-be-migrated virtual machine.

In this embodiment of the present invention, optionally, when calculating the value of temperature effect exerted on the server with the largest temperature value at the current time by each virtual machine in the server with the largest temperature value at the current time, the determining unit 32 is specifically configured to:

acquire first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value;

acquire a first use rate of a specified hardware device of the server with the largest temperature value at the current time, where the first use rate is specific to each virtual machine in the server with the largest temperature value at the current time, the first use rate is collected at the previous sampling time point adjacent to the current time, and the specified hardware device has an attribute that heat is generated and the generated heat changes with load of the specified hardware device;

acquire a second use rate of the specified hardware device of the server with the largest temperature value at the current time, where the second use rate is collected at each sampling time point in first specified duration previous to the current time;

based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predict, by using a weighted summing manner, a temperature value of the server with the largest temperature value at the current time available after each virtual machine in the server with the largest temperature value at the current time is migrated out from the server with the largest temperature value at the current time; and

perform the following step, which is performed on a first virtual machine, on each virtual machine in the server with the largest temperature value at the current time, where the first virtual machine is any virtual machine in all virtual machines in the server with the largest temperature value at the current time:

using an absolute value of a temperature difference between a predicted temperature value and the acquired first air outlet temperature as a value of temperature effect exerted on the server with the largest temperature value at the current time by the first virtual machine, where the predicted temperature value is a temperature value of the server with the largest temperature value at the current time after the first virtual machine is migrated out from the server with the largest temperature value at the current time.

In this embodiment of the present invention, optionally, when predicting, by using the weighted summing manner, the temperature value of the server with the largest temperature value at the current time available after each virtual machine in the server with the largest temperature value at the current time is migrated out from the server with the largest temperature value at the current time, the determining unit 32 is specifically configured to:

perform the following steps, which are performed on the first virtual machine, on each virtual machine in the server with the largest temperature value at the current time:

obtaining a first product by multiplying the acquired first air outlet temperature by the determined weighted value of the first air outlet temperature;

obtaining a second product by multiplying the acquired first air inlet temperature by the determined weighted value of the first air inlet temperature;

obtaining a third product by multiplying the acquired first use rate by the determined weighted value of the first use rate;

obtaining a fourth product by multiplying the acquired second use rate by the determined weighted value of the second use rate; and

adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

In this embodiment of the present invention, optionally, when determining the weighted value of the first air vent temperature, the weighted value of the first air inlet temperature, the weighted value of the first use rate, the weighted value of the second use rate, and the ambient temperature value, the determining unit 32 is specifically configured to:

acquire second air outlet temperature obtained by collecting, at each sampling time point in a period of time previous to the current time, the temperature at the air outlet of the server with the largest temperature value at the current time;

acquire third air outlet temperature obtained by collecting, at a specified time point corresponding to each sampling time point, the temperature at the air outlet of the server with the largest temperature value at the current time;

acquire second air inlet temperature obtained by collecting, at the specified time point corresponding to each sampling time point, the temperature at the air inlet of the server with the largest temperature value at the current time;

acquire a third use rate of the specified hardware device of the server with the largest temperature value at the current time, where the third use rate is specific to each virtual machine in the server with the largest temperature value at the current time, and the third use rate is collected at the specified time point corresponding to each sampling time point;

acquire a fourth use rate of the specified hardware device of the server with the largest temperature value at the current time, where the fourth use rate is collected in second specified duration corresponding to each sampling time point; and

use the acquired second air outlet temperature as a dependent variable, separately use the acquired third air outlet temperature, second air inlet temperature, third use rate, and fourth use rate as an independent variable, and determine, by using the weighted summing manner, the weighted value of the first air outlet temperature, the weighted value of the first air inlet temperature, the weighted value of the first use rate, the weighted value of the second use rate, and the ambient temperature value, where:

the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

In this embodiment of the present invention, optionally, when selecting the destination server from the other servers that are included in the data center except the server with the largest temperature value at the current time, the selecting unit 33 is specifically configured to:

from the other servers that are included in the data center except the server with the largest temperature value at the current time, select by means of screening a server that does not include a virtual machine mutually exclusive with the determined to-be-migrated virtual machine, and/or select by means of screening a server that has an idle resource and meets a resource requirement of the determined to-be-migrated virtual machine;

predict a temperature value of each selected server available after the determined to-be-migrated virtual machine is migrated to each selected server; and

use a server that is in the selected server and whose corresponding predicted temperature value is less than the largest temperature value as the selected destination server.

In this embodiment of the present invention, optionally, when using the server that is in the selected server and whose corresponding predicted temperature value is less than the largest temperature value as the selected destination server, the selecting unit 33 is specifically configured to:

use any server that is in the selected server and whose temperature value is less than the largest temperature value as the selected destination server.

In this embodiment of the present invention, optionally, when using the server that is in the selected server and whose corresponding predicted temperature value is less than the largest temperature value as the selected destination server, the selecting unit 33 is specifically configured to:

perform the following steps, which are performed on a first server, on each server in the selected servers, where the first server is any server in the selected servers:

predicting temperature values of the first server and the server with the largest temperature value at the current time after the determined to-be-migrated virtual machine is migrated to the first server;

calculating a difference between a largest temperature value and a smallest temperature value in: the predicted temperature values corresponding to the first server and the server with the largest temperature value at the current time, and measured temperature values obtained by separately measuring other servers in the data center except the first server and the server with the largest temperature value at the current time; and

from a calculated difference corresponding to each server in the selected servers, determining a server corresponding to a smallest difference as the selected destination server.

In this embodiment of the present invention, optionally, when predicting the temperature value of the first server available after the determined to-be-migrated virtual machine is migrated to the first server, the selecting unit 33 is specifically configured to:

acquire fourth air outlet temperature obtained by collecting temperature at an air outlet of the first server at the previous sampling time point adjacent to the current time;

acquire third air inlet temperature obtained by collecting temperature at an air inlet of the first server at the previous sampling time point adjacent to the current time;

acquire a first use rate of the specified hardware device of the server with the largest temperature value at the current time, where the first use rate is specific to the determined to-be-migrated virtual machine, and the first use rate is collected at the previous sampling time point adjacent to the current time;

acquire first total storage space of the server with the largest temperature value at the current time, and acquire second total storage space of the first server;

acquire a fifth use rate of a specified hardware device of the first server, where the fifth use rate is collected at each sampling time point that is previous to the current time and in the first specified duration;

obtain a fifth product by multiplying the acquired fourth air outlet temperature by the determined weighted value of the first air outlet temperature;

obtain a sixth product by multiplying the acquired third air inlet temperature by the determined weighted value of the first air inlet temperature;

obtain a seventh product by multiplying a product of the acquired first use rate and the determined weighted value of the first use rate by a ratio of the acquired second total storage space to the first total storage space;

obtain an eighth product by multiplying the acquired fifth use rate by the determined weighted value of the second use rate; and

add the fifth product, the sixth product, the seventh product, the eighth product, and the determined ambient temperature value, and use the sum obtained by the adding as the predicted temperature value of the first server available after the determined to-be-migrated virtual machine is migrated to the first server.

In this embodiment of the present invention, optionally, when predicting the temperature value of the server with the largest temperature value at the current time after the determined to-be-migrated virtual machine is migrated from the server with the largest temperature value at the current time to the first server, the selecting unit 33 is specifically configured to:

acquire the first air outlet temperature obtained by collecting, at the previous sampling time point adjacent to the current time, the temperature at the air outlet of the server with the largest temperature value at the current time;

acquire the first air inlet temperature obtained by collecting, at the previous sampling time point adjacent to the current time, the temperature at the air inlet of the server with the largest temperature value at the current time;

acquire the first use rate of the specified hardware device of the server with the largest temperature value at the current time, where the first use rate is specific to the determined to-be-migrated virtual machine, and the first use rate is collected at the previous sampling time point adjacent to the current time;

acquire the second use rate of the specified hardware device of the server with the largest temperature value at the current time, where the second use rate is collected at each sampling time point that is previous to the current time and in the first specified duration;

obtain the first product by multiplying the acquired first air outlet temperature by the determined weighted value of the first air outlet temperature;

obtain the second product by multiplying the acquired first air inlet temperature by the determined weighted value of the first air inlet temperature;

obtain the third product by multiplying the acquired first use rate by the determined weighted value of the first use rate;

obtain the fourth product by multiplying the acquired second use rate by the determined weighted value of the second use rate; and

add the first product, the second product, the third product, the fourth product, and the determined ambient temperature value, and use the sum obtained by the adding as the predicted temperature value of the server with the largest temperature value at the current time after the determined to-be-migrated virtual machine is migrated from the server with the largest temperature value at the current time to the first server.

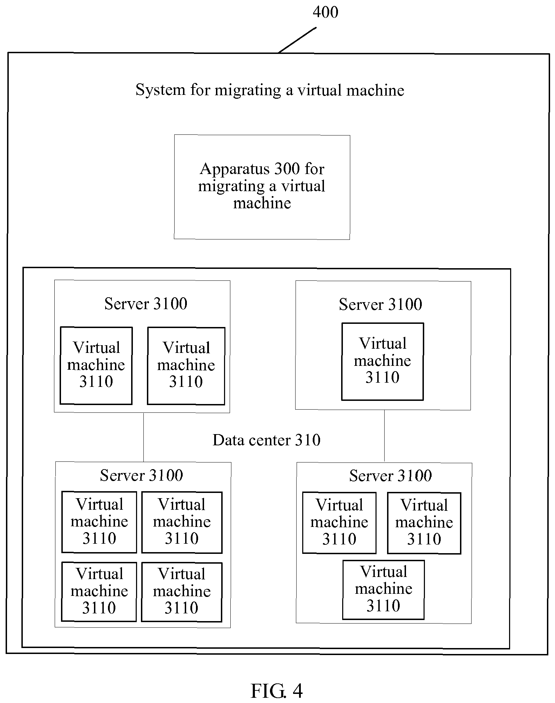

Based on the foregoing technical solution and referring to FIG. 4, an embodiment of the present invention provides a system 400 for migrating a virtual machine, including a data center 310, where the data center 310 includes at least one server 3100, and each server 3100 in the at least one server 3100 includes at least one virtual machine 3110; and further including the apparatus 300 for migrating a virtual machine shown in FIG. 3, where different virtual machines 3110 in each server 3100 are virtual processing units that are configured to process different threads and separately obtained by logically dividing processing resources in server 3100. When one server 3100 includes multiple virtual machines 3110, different virtual machines 3110 may separately process different threads, so that the server 3110 performs multithread processing.

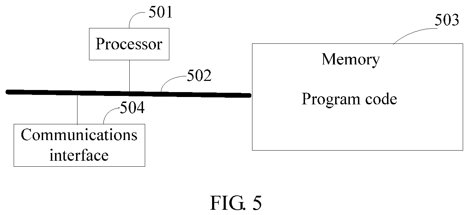

As shown in FIG. 5, FIG. 5 is an entity diagram of an apparatus for migrating a virtual machine according to an embodiment of the present invention. The apparatus for migrating a virtual machine includes at least one processor 501, a communications bus 502, a memory 503, and at least one communications interface 504.

The communications bus 502 is configured to implement connections and communication among the foregoing components, and the communications interface 504 is configured to connect to and communicate with an external device.

The memory 503 is configured to store program code that needs to be executed, and the processor 501 may invoke, by using the communications bus 502, program code that is stored in the memory 503 and has a function of migrating a virtual machine. When invoking the program code stored in the memory 503, the processor 501 performs the following operations:

acquiring a temperature value of each server in a data center at a current time;

determining a largest temperature value and a smallest temperature value from the acquired temperature values of the servers in the data center, and calculating a difference between the largest temperature value and the smallest temperature value;

when it is determined that the difference reaches a preset threshold, determining a to-be-migrated virtual machine from a server with the largest temperature value at the current time, where the preset threshold is greater than or equal to 0;

selecting a destination server from other servers that are included in the data center except the server with the largest temperature value at the current time, where the selected destination server meets the following condition: after the determined to-be-migrated virtual machine is migrated to the destination server, a temperature value of the destination server is less than the largest temperature value; and

migrating the determined to-be-migrated virtual machine to the destination server.

When invoking the program code stored in the memory 503, the processor 501 may further perform the following operations:

calculating a value of temperature effect exerted on the server with the largest temperature value at the current time by each virtual machine in the server with the largest temperature value at the current time, where the value of temperature effect exerted on the server with the largest temperature value at the current time by each virtual machine is a temperature value variation of the server with the largest temperature value at the current time when each virtual machine runs in the server with the largest temperature value at the current time;

determining a largest value of temperature effect from the calculated values of temperature effect exerted on the server with the largest temperature value at the current time separately by all virtual machines; and

using a virtual machine with the determined largest value of temperature effect as the determined to-be-migrated virtual machine.

When invoking the program code stored in the memory 503, the processor 501 may further perform the following operations:

from the other servers that are included in the data center except the server with the largest temperature value at the current time, selecting by means of screening a server that does not include a virtual machine mutually exclusive with the determined to-be-migrated virtual machine, and/or selecting by means of screening a server that has an idle resource and meets a resource requirement of the determined to-be-migrated virtual machine;

predicting a temperature value of each selected server available after the determined to-be-migrated virtual machine is migrated to each selected server; and

using a server that is in the selected server and whose corresponding predicted temperature value is less than the largest temperature value as the selected destination server.

In conclusion, in the embodiment of the present invention, a method for migrating a virtual machine is provided. The method includes: acquiring a temperature value of each server in a data center at a current time; determining a largest temperature value and a smallest temperature value from the acquired temperature values of the servers in the data center, and calculating a difference between the largest temperature value and the smallest temperature value; when it is determined that the difference reaches a preset threshold, determining a to-be-migrated virtual machine from a server with the largest temperature value at the current time, where the preset threshold is greater than or equal to 0; selecting a destination server from other servers that are included in the data center except the server with the largest temperature value at the current time, where the selected destination server meets the following condition: after the determined to-be-migrated virtual machine is migrated to the destination server, a temperature value of the destination server is less than the largest temperature value; and migrating the determined to-be-migrated virtual machine to the destination server. In this solution, the to-be-migrated virtual machine is determined from the server with the largest temperature value at the current time, and the to-be-migrated virtual machine is migrated to the destination server. Because a temperature value of the destination server available after the to-be-migrated virtual machine is migrated to the destination server is less than the largest temperature value of the server with the largest temperature value at the current time available before the virtual machine is migrated out from the server with the largest temperature value at the current time, a largest temperature value of a server in the data center is reduced; in addition, during refrigeration, more energy is consumed if the largest temperature value is larger, and less energy is consumed if the largest temperature value is smaller. Therefore, this solution reduces energy consumed in a refrigeration process.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a function in one or more processes in the flowcharts and/or in one or more blocks in the block diagrams.

Although preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. In this way, the present invention is intended to cover these modifications and variations provided that these modifications and variations to the embodiments of the present invention fall within the scope of claims of the present invention and equivalent technologies of the claims.

**Claims**

1. A method for migrating a virtual machine, comprising:

Acquiring (100) a temperature value of each server in a data center at a current time;
determining (110) a largest temperature value and a smallest temperature value from the acquired temperature values of the servers in the data center, and calculating a difference between the largest temperature value and the smallest temperature value;
when it is determined that the difference reaches a preset threshold, determining (120) a to-be-migrated virtual machine from a server with the largest temperature value at the current time, wherein the preset threshold is greater than 0;
**characterized in that**, the method further comprises:

from the other servers that are comprised in the data center except the server with the largest temperature value at the current time, selecting by means of screening a server that does not comprise a virtual machine mutually exclusive with the determined to-be-migrated virtual machine, and/or selecting by means of screening a server that has an idle resource and meets a resource requirement of the determined to-be-migrated virtual machine;
performing the following steps, which are performed on a first server, on each server in selected servers, wherein the first server is any server in the selected servers:

predicting temperature values of the first server and the server with the largest temperature value at the current time after the determined to-be-migrated virtual machine is migrated to the first server;
calculating a difference between a largest temperature value and a smallest temperature value in the following temperature values: the predicted temperature value of the first server and the predicted temperature value of the server with the largest temperature value at the current time after the determined to-be-migrated virtual machine is migrated to the first server, and measured temperature values obtained by separately measuring other servers in the data center except the first server and the server with the largest temperature value at the current time;

determining a server corresponding to a smallest difference, from a calculated difference corresponding to each server in the selected servers, as the selected destination server, wherein the selected destination server meets the following condition: after the determined to-be-migrated virtual machine is migrated to the destination server, a temperature value of the destination server is less than the largest temperature value; and

migrating (140) the determined to-be-migrated virtual machine to the destination server.

2. The method according to claim 1, wherein the determining (120) a to-be-migrated virtual machine from a server with the largest temperature value at the current time specifically comprises:

calculating a value of temperature effect exerted on the server with the largest temperature value at the current time by each virtual machine in the server with the largest temperature value at the current time, wherein the value of temperature effect exerted on the server with the largest temperature value at the current time by each virtual machine is a temperature value variation of the server with the largest temperature value at the current time when each virtual machine runs in the server with the largest temperature value at the current time;

determining a largest value of temperature effect from the calculated values of temperature effect exerted on the server with the largest temperature value at the current time separately by all virtual machines; and

using a virtual machine with the determined largest value of temperature effect as the determined to-be-migrated virtual machine.

3. The method according to claim 2, wherein the calculating a value of temperature effect exerted on the server with the largest temperature value at the current time by each virtual machine in the server with the largest temperature value at the current time comprises:

acquiring first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value;

acquiring a first use rate of a specified hardware device of the server with the largest temperature value at the current time, wherein the first use rate refers to a use rate of the specified hardware device by each virtual machine in the server with the largest temperature value at the current time, the first use rate is collected at the previous sampling time point adjacent to the current time, and the specified hardware device has an attribute that heat is generated and the generated heat changes with load of the specified hardware device;

acquiring a second use rate of the specified hardware device of the server with the largest temperature value at the current time, wherein the second use rate is collected at each sampling time point that is previous to the current time and in first specified duration away from the current time;

based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predicting, by using a weighted summing manner, a temperature value of the server with the largest temperature value at the current time available after each virtual machine in the server with the largest temperature value at the current time is migrated out from the server with the largest temperature value at the current time; and

performing the following step, which is performed on a first virtual machine, on each virtual machine in the server with the largest temperature value at the current time, wherein the first virtual machine is any virtual machine in all virtual machines in the server with the largest temperature value at the current time:

using an absolute value of a temperature difference between a predicted temperature value and the acquired first air outlet temperature as a value of temperature effect exerted on the server with the largest temperature value at the current time by the first virtual machine, wherein the predicted temperature value is a temperature value of the server with the largest temperature value at the current time after the first virtual machine is migrated out from the server with the largest temperature value at the current time.

4. The method according to claim 3, wherein the predicting, by using a weighted summing manner, a temperature value of the server with the largest temperature value at the current time available after each virtual machine in the server with the largest temperature value at the current time is migrated out from the server with the largest temperature value at the current time comprises:

performing the following steps, which are performed on the first virtual machine, on each virtual machine in the server with the largest temperature value at the current time:

> obtaining a first product by multiplying the acquired first air outlet temperature by the determined weighted value of the first air outlet temperature;
> obtaining a second product by multiplying the acquired first air inlet temperature by the determined weighted value of the first air inlet temperature;
> obtaining a third product by multiplying the acquired first use rate by the determined weighted value of the first use rate;
> obtaining a fourth product by multiplying the acquired second use rate by the determined weighted value of the second use rate; and
> adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

5. The method according to claim 3 or 4, wherein the determining a weighted value of the first air outlet temperature, a weighted value of the first air inlet temperature, a weighted value of the first use rate, a weighted value of the second use rate, and an ambient temperature value comprises:

> acquiring second air outlet temperature obtained by collecting, at each sampling time point in a period of time previous to the current time, the temperature at the air outlet of the server with the largest temperature value at the current time;
> acquiring third air outlet temperature obtained by collecting, at a specified time point corresponding to each sampling time point, the temperature at the air outlet of the server with the largest temperature value at the current time;
> acquiring second air inlet temperature obtained by collecting, at the specified time point corresponding to each sampling time point, the temperature at the air inlet of the server with the largest temperature value at the current time;
> acquiring a third use rate of the specified hardware device of the server with the largest temperature value at the current time, wherein the third use rate is specific to each virtual machine in the server with the largest temperature value at the current time, and the third use rate is collected at the specified time point corresponding to each sampling time point;
> acquiring a fourth use rate of the specified hardware device of the server with the largest temperature value at the current time, wherein the fourth use rate is collected in second specified duration corresponding to each sampling time point; and
> using the acquired second air outlet temperature as a dependent variable, separately using the acquired third air outlet temperature, second air inlet temperature, third use rate, and fourth use rate as an independent variable, and determining, by using the weighted summing manner, the weighted value of the first air outlet temperature, the weighted value of the first air inlet temperature, the weighted value of the first use rate, the weighted value of the second use rate, and the ambient temperature value, wherein:
> the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

6. The method according to claim 1, wherein the predicting a temperature value of the first server available after the determined to-be-migrated virtual machine is migrated to the first server comprises:

> acquiring fourth air outlet temperature obtained by collecting temperature at an air outlet of the first server at the previous sampling time point adjacent to the current time;
> acquiring third air inlet temperature obtained by collecting temperature at an air inlet of the first server at the previous sampling time point adjacent to the current time;
> acquiring a first use rate of the specified hardware device of the server with the largest temperature value at the current time, wherein the first use rate is specific to the determined to-be-migrated virtual machine, and the first use rate is collected at the previous sampling time point adjacent to the current time;
> acquiring first total storage space of the server with the largest temperature value at the current time, and acquiring second total storage space of the first server;

acquiring a fifth use rate of a specified hardware device of the first server, wherein the fifth use rate is collected at each sampling time point that is previous to the current time and in the first specified duration;

obtaining a fifth product by multiplying the acquired fourth air outlet temperature by the determined weighted value of the first air outlet temperature;

obtaining a sixth product by multiplying the acquired third air inlet temperature by the determined weighted value of the first air inlet temperature;

obtaining a seventh product by multiplying a product of the acquired first use rate and the determined weighted value of the first use rate by a ratio of the acquired second total storage space to the first total storage space;

obtaining an eighth product by multiplying the acquired fifth use rate by the determined weighted value of the second use rate; and

adding the fifth product, the sixth product, the seventh product, the eighth product, and the determined ambient temperature value, and using the sum obtained by the adding as the predicted temperature value of the first server available after the determined to-be-migrated virtual machine is migrated to the first server.

7. The method according to claim 1, wherein the predicting a temperature value of the server with the largest temperature value at the current time after the determined to-be-migrated virtual machine is migrated to the first server comprises:

acquiring the first air outlet temperature obtained by collecting, at the previous sampling time point adjacent to the current time, the temperature at the air outlet of the server with the largest temperature value at the current time;

acquiring the first air inlet temperature obtained by collecting, at the previous sampling time point adjacent to the current time, the temperature at the air inlet of the server with the largest temperature value at the current time;

acquiring the first use rate of the specified hardware device of the server with the largest temperature value at the current time, wherein the first use rate is specific to the determined to-be-migrated virtual machine, and the first use rate is collected at the previous sampling time point adjacent to the current time;

acquiring the second use rate of the specified hardware device of the server with the largest temperature value at the current time, wherein the second use rate is collected at each sampling time point that is previous to the current time and in the first specified duration;

obtaining the first product by multiplying the acquired first air outlet temperature by the weighted value of the first air outlet temperature;

obtaining the second product by multiplying the acquired first air inlet temperature by the weighted value of the first air inlet temperature;

obtaining the third product by multiplying the acquired first use rate by the weighted value of the first use rate;

obtaining the fourth product by multiplying the acquired second use rate by the weighted value of the second use rate; and

adding the first product, the second product, the third product, the fourth product, and the ambient temperature value, and using the sum obtained by the adding as the predicted temperature value of the server with the largest temperature value at the current time after the determined to-be-migrated virtual machine is migrated from the server with the largest temperature value at the current time to the first server.

8. An apparatus for migrating a virtual machine (300), comprising:

an acquiring unit (30), configured to acquire a temperature value of each server in a data center at a current time;

a calculating unit (31), configured to: determine a largest temperature value and a smallest temperature value from the acquired temperature values of the servers in the data center, and calculate a difference between the largest temperature value and the smallest temperature value;

a determining unit (32), configured to determine a to-be-migrated virtual machine from a server with the largest temperature value at the current time when it is determined that the difference reaches a preset threshold, wherein the preset threshold is greater than 0;

**characterized in that**, the apparatus further comprises:

a selecting unit (33), configured to:

from the other servers that are comprised in the data center except the server with the largest temperature value at the current time, select by means of screening a server that does not comprise a virtual machine mutually exclusive with the determined to-be-migrated virtual machine, and/or select by means of screening a server that has an idle resource and meets a resource requirement of the determined to-be-migrated virtual machine;

perform the following steps, which are performed on a first server, on each server in the selected servers, wherein the first server is any server in the selected servers:

predicting temperature values of the first server and the server with the largest temperature value at the current time after the determined to-be-migrated virtual machine is migrated to the first server; calculating a difference between a largest temperature value and a smallest temperature value in the following temperature values: the predicted temperature value of the first server and the predicted temperature value of the server with the largest temperature value at the current time after the determined to-be-migrated virtual machine is migrated to the first server, and measured temperature values obtained by separately measuring other servers in the data center except the first server and the server with the largest temperature value at the current time; and determining a server corresponding to a smallest difference, from a calculated difference corresponding to each server in the selected servers, as the selected destination server wherein the selected destination server meets the following condition: after the determined to-be-migrated virtual machine is migrated to the destination server, a temperature value of the destination server is less than the largest temperature value; and

a migrating unit (34), configured to migrate the determined to-be-migrated virtual machine to the destination server.

9. The apparatus (300) according to claim 8 wherein when determining the to-be-migrated virtual machine from the server with the largest temperature value at the current time, the determining unit (32) is specifically configured to:

calculate a value of temperature effect exerted on the server with the largest temperature value at the current time by each virtual machine in the server with the largest temperature value at the current time, wherein the value of temperature effect exerted on the server with the largest temperature value at the current time by each virtual machine is a temperature value variation of the server with the largest temperature value at the current time when each virtual machine runs in the server with the largest temperature value at the current time; determine a largest value of temperature effect from the calculated values of temperature effect exerted on the server with the largest temperature value at the current time separately by all virtual machines; and use a virtual machine with the determined largest value of temperature effect as the determined to-be-migrated virtual machine.

10. The apparatus (300) according to claim 9, wherein when calculating the value of temperature effect exerted on the server with the largest temperature value at the current time by each virtual machine in the server with the largest temperature value at the current time, the determining unit (32) is specifically configured to:

acquire first air outlet temperature obtained by collecting, at a previous sampling time point adjacent to the current time, temperature at an air outlet of the server with the largest temperature value at the current time, and first air inlet temperature obtained by collecting, at the previous sampling time point adjacent to the current time, temperature at an air inlet of the server with the largest temperature value; acquire a first use rate of a specified hardware device of the server with the largest temperature value at the current time, wherein the first use rate is specific to each virtual machine in the server with the largest temperature value at the current time, the first use rate is collected at the previous sampling time point adjacent to the current time, and the specified hardware device has an attribute that heat is generated and the generated heat changes with load of the specified hardware device; acquire a second use rate of the specified hardware device of the server with the largest temperature value at the current time, wherein the second use rate is collected at each sampling time point in first specified duration previous to the current time; based on the first air outlet temperature, the first air inlet temperature, the first use rate, and the second use rate that are acquired, and a weighted value of the first air outlet temperature, a weighted value of the first air inlet temperature, a weighted value of the first use rate, a weighted value of the second use rate, and an ambient temperature value that are determined, predict, by using a weighted summing manner, a temperature value of the server with the largest temperature value at the current time available after each virtual machine in the server with the largest temperature value at the current time is migrated out from the server with the largest temperature value at the current time; and perform the following step, which is performed on a first virtual machine, on each virtual machine in the server with the largest temperature value at the current time, wherein the first virtual machine is any virtual machine in all virtual machines in the server with the largest temperature value at the current time:

using an absolute value of a temperature difference between a predicted temperature value and the acquired first air outlet temperature as a value of temperature effect exerted on the server with the largest temperature value at the current time by the first virtual machine, wherein the predicted temperature value is a temperature value of the server with the largest temperature value at the current time after the first virtual machine is migrated out from the server with the largest temperature value at the current time.

11. The apparatus (300) according to claim 10, wherein when predicting, by using the weighted summing manner, the temperature value of the server with the largest temperature value at the current time available after each virtual machine in the server with the largest temperature value at the current time is migrated out from the server with the largest temperature value at the current time, the determining unit (32) is specifically configured to:

perform the following steps, which are performed on the first virtual machine, on each virtual machine in the server with the largest temperature value at the current time:

obtaining a first product by multiplying the acquired first air outlet temperature by the determined weighted value of the first air outlet temperature;

obtaining a second product by multiplying the acquired first air inlet temperature by the determined weighted value of the first air inlet temperature;

obtaining a third product by multiplying the acquired first use rate by the determined weighted value of the first use rate;

obtaining a fourth product by multiplying the acquired second use rate by the determined weighted value of the second use rate; and

adding the first product, the second product, the third product, the fourth product, and the determined ambient temperature value, and using the sum obtained by the adding as the temperature value of the server with the largest temperature value at the current time after the first virtual machine is migrated out from the server with the largest temperature value at the current time.

12. The apparatus (300) according to claim 10 or 11, wherein when determining the weighted value of the first air outlettemperature, the weighted value of the first air inlet temperature, the weighted value of the first use rate, the weighted value of the second use rate, and the ambient temperature value, the determining unit (32) is specifically configured to:

acquire second air outlet temperature obtained by collecting, at each sampling time point in a period of time previous to the current time, the temperature at the air outlet of the server with the largest temperature value at the current time;

acquire third air outlet temperature obtained by collecting, at a specified time point corresponding to each sampling time point, the temperature at the air outlet of the server with the largest temperature value at the current time;

acquire second air inlet temperature obtained by collecting, at the specified time point corresponding to each sampling time point, the temperature at the air inlet of the server with the largest temperature value at the current time;

acquire a third use rate of the specified hardware device of the server with the largest temperature value at the current time, wherein the third use rate is specific to each virtual machine in the server with the largest temperature value at the current time, and the third use rate is collected at the specified time point corresponding to each sampling time point;

acquire a fourth use rate of the specified hardware device of the server with the largest temperature value at the current time, wherein the fourth use rate is collected in second specified duration corresponding to each sampling time point; and

use the acquired second air outlet temperature as a dependent variable, separately use the acquired third air outlet temperature, second air inlet temperature, third use rate, and fourth use rate as an independent variable, and determine, by using the weighted summing manner, the weighted value of the first air outlet temperature, the weighted value of the first air inlet temperature, the weighted value of the first use rate, the weighted value of the second use rate, and the ambient temperature value, wherein:

the specified time point corresponding to any sampling time point is previous to the any sampling time point, and duration between the specified time point corresponding to the any sampling time point and the any sampling time point is equal to duration between the current time and a set prediction time point; and the second specified duration corresponding to the any sampling time point is a period of time that is previous to the specified time point corresponding to the any sampling time point and any duration away from the corresponding specified time point.

13. The apparatus (300) according to claim 8, wherein when predicting the temperature value of the first server available after the to-be-migrated virtual machine is migrated to the first server, the selecting unit (33) is specifically configured to:

acquire fourth air outlet temperature obtained by collecting temperature at an air outlet of the first server at the previous sampling time point adjacent to the current time;
acquire third air inlet temperature obtained by collecting temperature at an air inlet of the first server at the previous sampling time point adjacent to the current time;
acquire a first use rate of the specified hardware device of the server with the largest temperature value at the current time, wherein the first use rate is specific to the determined to-be-migrated virtual machine, and the first use rate is collected at the previous sampling time point adjacent to the current time;
acquire first total storage space of the server with the largest temperature value at the current time, and acquire second total storage space of the first server;
acquire a fifth use rate of a specified hardware device of the first server, wherein the fifth use rate is collected at each sampling time point that is previous to the current time and in the first specified duration;
obtain a fifth product by multiplying the acquired fourth air outlet temperature by the determined weighted value of the first air outlet temperature;
obtain a sixth product by multiplying the acquired third air inlet temperature by the determined weighted value of the first air inlet temperature;
obtain a seventh product by multiplying a product of the acquired first use rate and the determined weighted value of the first use rate by a ratio of the acquired second total storage space to the first total storage space;
obtain an eighth product by multiplying the acquired fifth use rate by the determined weighted value of the second use rate; and
add the fifth product, the sixth product, the seventh product, the eighth product, and the determined ambient temperature value, and use the sum obtained by the adding as the predicted temperature value of the first server available after the determined to-be-migrated virtual machine is migrated to the first server.

14. The apparatus (300) according to claim 8, wherein when predicting the temperature value of the server with the largest temperature value at the current time after the determined to-be-migrated virtual machine is migrated to the first server, the selecting unit (33) is specifically configured to:

acquire the first air outlet temperature obtained by collecting, at the previous sampling time point adjacent to the current time, the temperature at the air outlet of the server with the largest temperature value at the current time;
acquire the first air inlet temperature obtained by collecting, at the previous sampling time point adjacent to the current time, the temperature at the air inlet of the server with the largest temperature value at the current time;
acquire the first use rate of the specified hardware device of the server with the largest temperature value at the current time, wherein the first use rate is specific to the determined to-be-migrated virtual machine, and the first use rate is collected at the previous sampling time point adjacent to the current time;
acquire the second use rate of the specified hardware device of the server with the largest temperature value at the current time, wherein the second use rate is collected at each sampling time point that is previous to the current time and in the first specified duration;
obtain the first product by multiplying the acquired first air outlet temperature by the weighted value of the first air outlet temperature;
obtain the second product by multiplying the acquired first air inlet temperature by the weighted value of the first air inlet temperature;
obtain the third product by multiplying the acquired first use rate by the weighted value of the first use rate;
obtain the fourth product by multiplying the acquired second use rate by the determined weighted value of the second use rate; and
add the first product, the second product, the third product, the fourth product, and the ambient temperature value, and use the sum obtained by the adding as the predicted temperature value of the server with the largest temperature value at the current time after the determined to-be-migrated virtual machine is migrated from the server with the largest temperature value at the current time to the first server.

15. A system for migrating a virtual machine (400), comprising a data center (310), wherein the data center (310) comprises at least one server (3100) wherein, each server (3100) comprises at least one virtual machine (3110);

and further comprising the apparatus (300) for migrating a virtual machine according to any one of claims 8 to 14.

**Patentansprüche**

1.  Verfahren zum Migrieren einer virtuellen Maschine, umfassend:

    Erfassen (100) eines Temperaturwerts eines jeden Servers in einem Rechenzentrum zu einem aktuellen Zeitpunkt;
    Bestimmen (110) eines größten Temperaturwerts und eines kleinsten Temperaturwerts aus den erfassten Temperaturwerten der Server in dem Rechenzentrum und Berechnen einer Differenz zwischen dem größten Temperaturwert und dem kleinsten Temperaturwert;
    wenn bestimmt wird, dass die Differenz einen voreingestellten Schwellenwert erreicht, Bestimmen (120) einer zum Migrieren bestimmten virtuellen Maschine von einem Server mit dem zum aktuellen Zeitpunkt größten Temperaturwert, wobei der voreingestellte Schwellenwert größer als 0 ist;
    **dadurch gekennzeichnet, dass** das Verfahren ferner umfasst:

    Auswählen eines Servers aus den anderen Servern, die im Rechenzentrum umfasst sind, mit Ausnahme des Servers mit dem zum aktuellen Zeitpunkt größten Temperaturwert, durch Screening eines Servers, der keine virtuelle Maschine umfasst, die mit der zum Migrieren bestimmten virtuellen Maschine übereinstimmt, und/oder Auswählen durch Screening eines Servers, der eine ungenutzte Ressource aufweist und einen Ressourcenbedarf der bestimmten zum Migrieren bestimmten virtuellen Maschine erfüllt;
    Durchführen der folgenden Schritte, die auf einem ersten Server durchgeführt werden, auf jedem Server in ausgewählten Servern, wobei der erste Server ein beliebiger Server in den ausgewählten Servern ist:

    Vorhersagen von Temperaturwerten des ersten Servers und des Servers mit dem zum aktuellen Zeitpunkt größten Temperaturwert, nachdem die bestimmte zu migrierende virtuelle Maschine auf den ersten Server migriert wurde;
    Berechnen einer Differenz zwischen einem größten Temperaturwert und einem kleinsten Temperaturwert in den folgenden Temperaturwerten: dem vorhergesagten Temperaturwert des ersten Servers und dem vorhergesagten Temperaturwert des Servers mit dem zum aktuellen Zeitpunkt größten Temperaturwert, nachdem die bestimmte zu migrierende virtuelle Maschine auf den ersten Server migriert wurde, und gemessenen Temperaturwerten, die durch separates Messen anderer Server im Rechenzentrum mit Ausnahme des ersten Servers und des Servers mit dem zum aktuellen Zeitpunkt größten Temperaturwert erhalten wurden;
    Bestimmen eines Servers, der einer kleinsten Differenz entspricht, aus einer berechneten Differenz, die jedem Server in den ausgewählten Servern entspricht, als ausgewählter Zielserver, wobei der ausgewählte Zielserver die folgende Bedingung erfüllt: nachdem die bestimmte zu migrierende virtuelle Maschine auf den Zielserver migriert wurde, ist ein Temperaturwert des Zielservers kleiner als der größte Temperaturwert; und
    Migrieren (140) der bestimmten zum Migrieren bestimmten virtuellen Maschine auf den Zielserver.

2.  Verfahren nach Anspruch 1, wobei das Bestimmen (120) einer zum Migrieren bestimmten virtuellen Maschine von einem Server mit dem zum aktuellen Zeitpunkt größten Temperaturwert insbesondere umfasst:

    Berechnen eines Wertes des auf den Server mit dem größten Temperaturwert zum aktuellen Zeitpunkt ausgeübten Temperatureinflusses durch jede virtuelle Maschine im Server mit dem zum aktuellen Zeitpunkt größten Temperaturwert, wobei der Wert des Temperatureinflusses, der auf den Server mit dem zum aktuellen Zeitpunkt größten Temperaturwert durch jede virtuelle Maschine ausgeübt wird, eine Temperaturwertänderung des Servers mit dem zum aktuellen Zeitpunkt größten Temperaturwert ist, wenn jede virtuelle Maschine im Server mit dem zum aktuellen Zeitpunkt größten Temperaturwert läuft;
    Bestimmen eines größten Wertes des Temperatureinflusses aus den berechneten Werten des Temperatureinflusses, der auf den Server mit dem zum aktuellen Zeitpunkt größten Temperaturwert ausgeübt wird, getrennt durch alle virtuellen Maschinen; und
    Verwenden einer virtuellen Maschine mit dem bestimmten größten Wert des Temperatureinflusses als der bestimmten zum Migrieren bestimmten virtuellen Maschine.

3.  Verfahren nach Anspruch 2, wobei das Berechnen eines Wertes des Temperatureinflusses, der auf den Server mit dem zum aktuellen Zeitpunkt größten Temperaturwert ausgeübt wird, durch jede virtuelle Maschine in dem Server mit dem zum aktuellen Zeitpunkt größten Temperaturwert umfasst:

Erfassen einer ersten Luftaustrittstemperatur, die durch Sammeln der Temperatur an einem Luftaustritt des Servers mit dem zum aktuellen Zeitpunkt größten Temperaturwert an einem vorhergehenden Abtastzeitpunkt angrenzend an die aktuelle Zeit erhalten wird, und einer ersten Lufteintrittstemperatur, die durch Sammeln der Temperatur an einem Lufteintritt des Servers mit dem größten Temperaturwert an dem zum aktuellen Zeitpunkt benachbarten vorhergehenden Abtastzeitpunkt erhalten wird;

Erfassen einer ersten Nutzungsrate einer spezifizierten Hardwarevorrichtung des Servers mit dem zum aktuellen Zeitpunkt größten Temperaturwert, wobei sich die erste Nutzungsrate auf eine Nutzungsrate der spezifizierten Hardwarevorrichtung durch jede virtuelle Maschine in dem Server mit dem zum aktuellen Zeitpunkt größten Temperaturwert bezieht, die erste Nutzungsrate zu dem zum aktuellen Zeitpunkt benachbarten vorherigen Abtastzeitpunkt gesammelt wird und die spezifizierte Hardwarevorrichtung ein Attribut aufweist, dass Wärme erzeugt wird und sich die erzeugte Wärme mit der Last der spezifizierten Hardwarevorrichtung ändert;

Erfassen einer zweiten Nutzungsrate der spezifizierten Hardwarevorrichtung des Servers mit dem zum aktuellen Zeitpunkt größten Temperaturwert, wobei die zweite Nutzungsrate zu jedem Abtastzeitpunkt gesammelt wird, der vor der aktuellen Zeit und in einer ersten spezifizierten Dauer außerhalb der aktuellen Zeit liegt;

basierend auf der ersten Luftaustrittstemperatur, der ersten Lufteintrittstemperatur, der ersten Nutzungsrate und der zweiten Nutzungsrate, die erfasst werden, und einem gewichteten Wert der ersten Luftaustrittstemperatur, einem gewichteten Wert der ersten Lufteintrittstemperatur, einem gewichteten Wert der ersten Nutzungsrate und einem gewichteten Wert der zweiten Nutzungsrate, und einen Umgebungstemperaturwert, die bestimmt werden, Vorhersagen, indem unter Verwendung einer gewichteten Summierungsweise ein Temperaturwert des Servers mit dem größten Temperaturwert verfügbar zum aktuellen Zeitpunkt nach jeder virtuellen Maschine in dem Server mit dem größten Temperaturwert zum aktuellen Zeitpunkt aus dem Server mit dem größten Temperaturwert zum aktuellen Zeitpunkt herausmigriert wird; und

Durchführen des folgenden Schrittes, der auf einer ersten virtuellen Maschine durchgeführt wird, auf jeder virtuellen Maschine im Server mit dem zum aktuellen Zeitpunkt größten Temperaturwert, wobei die erste virtuelle Maschine eine beliebige virtuelle Maschine in allen virtuellen Maschinen im Server mit dem zum aktuellen Zeitpunkt größten Temperaturwert ist;

Verwenden eines Absolutwertes einer Temperaturdifferenz zwischen einem vorhergesagten Temperaturwert und der erfassten ersten Luftaustrittstemperatur als Wert des Temperatureinflusses, der von der ersten virtuellen Maschine auf den Server mit dem zum aktuellen Zeitpunkt größten Temperaturwert ausgeübt wird, wobei der vorhergesagte Temperaturwert ein Temperaturwert des Servers mit dem zum aktuellen Zeitpunkt größten Temperaturwert ist, nachdem die erste virtuelle Maschine aus dem Server mit dem zum aktuellen Zeitpunkt größten Temperaturwert migriert wurde.

4. Verfahren nach Anspruch 3, wobei das Vorhersagen eines Temperaturwerts des Servers mit dem größten Temperaturwert verfügbar zum aktuellen Zeitpunkt nachdem jede virtuelle Maschine in dem Server mit dem zum aktuellen Zeitpunkt größten Temperaturwert aus dem Server mit dem zum aktuellen Zeitpunkt größten Temperaturwert hinaus migriert wird, unter Verwendung einer gewichteten Summierungsmethode umfasst:

Durchführen der folgenden Schritte, die auf der ersten virtuellen Maschine ausgeführt werden, auf jeder virtuellen Maschine auf dem Server mit dem zum aktuellen Zeitpunkt größten Temperaturwert;

Erhalten eines ersten Produkts durch Multiplizieren der erfassten ersten Luftaustrittstemperatur mit dem bestimmten gewichteten Wert der ersten Luftaustrittstemperatur;

Erhalten eines zweiten Produkts durch Multiplizieren der erfassten ersten Lufteintrittstemperatur mit dem bestimmten gewichteten Wert der ersten Lufteintrittstemperatur;

Erhalten eines dritten Produkts durch Multiplizieren der erworbenen ersten Nutzungsrate mit dem bestimmten gewichteten Wert der ersten Nutzungsrate;

Erhalten eines vierten Produkts durch Multiplizieren der erworbenen zweiten Nutzungsrate mit dem bestimmten gewichteten Wert der zweiten Nutzungsrate; und

Hinzufügen des ersten Produkts, des zweiten Produkts, des dritten Produkts, des vierten Produkts und des bestimmten Umgebungstemperaturwerts und Verwenden der Summe, die durch das Hinzufügen als Temperaturwert des Servers mit dem zum aktuellen Zeitpunkt größten Temperaturwert erhalten wird, nachdem die erste virtuelle Maschine aus dem Server mit dem zum aktuellen Zeitpunkt größten Temperaturwert heraus migriert wurde.

5. Verfahren nach Anspruch 3 oder 4, wobei das Bestimmen eines gewichteten Wertes der ersten Luftaustrittstemperatur, eines gewichteten Wertes der ersten Lufteintrittstemperatur, eines gewichteten Wertes der ersten Nutzungsrate, eines gewichteten Wertes der zweiten Nutzungsrate und eines Umgebungstemperaturwertes umfasst:

Erfassen einer zweiten Luftaustrittstemperatur, die durch Sammeln der Temperatur am Luftaustritt des Servers mit dem zum aktuellen Zeitpunkt größten Temperaturwert zu jedem Abtastzeitpunkt in einer Zeitspanne vor der aktuellen Zeit erhalten wurde;

Erfassen der dritten Luftaustrittstemperatur, die durch Sammeln der Temperatur am Luftaustritt des Servers mit dem zum aktuellen Zeitpunkt größten Temperaturwert zu einem bestimmten Zeitpunkt erhalten wird, der jedem Abtastzeitpunkt entspricht;

Erfassen einer zweiten Lufteintrittstemperatur, die durch Sammeln der Temperatur am Lufteintritt des Servers mit dem zum aktuellen Zeitpunkt größten Temperaturwert zu dem bestimmten Zeitpunkt erhalten wird, der jedem Abtastzeitpunkt entspricht;

Erfassen einer dritten Nutzungsrate der spezifizierten Hardwarevorrichtung des Servers mit dem zum aktuellen Zeitpunkt größten Temperaturwert, wobei die dritte Nutzungsrate für jede virtuelle Maschine in dem Server mit dem zum aktuellen Zeitpunkt größten Temperaturwert spezifisch ist, und die dritte Nutzungsrate zu dem zum jeweiligen Abtastzeitpunkt spezifizierten Zeitpunkt gesammelt wird;

Erfassen einer vierten Nutzungsrate der spezifizierten Hardwarevorrichtung des Servers mit dem zum aktuellen Zeitpunkt größten Temperaturwert, wobei die vierte Nutzungsrate in einer zweiten spezifizierten Zeitspanne gesammelt wird, die jedem Abtastzeitpunkt entspricht; und

Verwenden der erfassten zweiten Luftaustrittstemperatur als abhängige Variable, getrennt unter Verwendung der erfassten dritten Luftaustrittstemperatur, der zweiten Lufteintrittstemperatur, der dritten Nutzungsrate und der vierten Nutzungsrate als unabhängige Variable, und Bestimmen unter Anwendung der gewichteten Summierungsweise des gewichteten Wertes der ersten Luftaustrittstemperatur, des gewichteten Wertes der ersten Lufteintrittstemperatur, des gewichteten Wertes der ersten Nutzungsrate, des gewichteten Wertes der zweiten Nutzungsrate und des Umgebungstemperaturwertes, wobei:

der spezifizierte Zeitpunkt, der einem beliebigen Abtastzeitpunkt entspricht, vor dem beliebigen Abtastzeitpunkt liegt, und die Zeitspanne zwischen dem spezifizierten Zeitpunkt, der dem beliebigen Abtastzeitpunkt entspricht, und dem beliebigen Abtastzeitpunkt gleich der Zeitspanne zwischen dem aktuellen Zeitpunkt und einem festgelegten Vorhersagezeitpunkt ist; und die zweite spezifizierte Zeitspanne, die dem beliebigen Abtastzeitpunkt entspricht, ist eine Zeitspanne, die dem spezifizierten Zeitpunkt, der dem beliebigen Abtastzeitpunkt entspricht, und einer beliebigen Zeitspanne außerhalb des entsprechenden spezifizierten Zeitpunkts voraus liegt.

6. Verfahren nach Anspruch 1, wobei das Vorhersagen eines Temperaturwerts des ersten Servers, der nach dem Migrieren der zum Migrieren bestimmten virtuellen Maschine zum ersten Server verfügbar ist, umfasst:

Erfassen einer vierten Luftaustrittstemperatur, die durch Sammeln der Temperatur an einem Luftaustritt des ersten Servers zu dem vorherigen Abtastzeitpunkt, der an die aktuelle Zeit angrenzt, erhalten wird;

Erfassen einer dritten Lufteintrittstemperatur, die durch Sammeln der Temperatur an einem Lufteintritt des ersten Servers zu dem vorherigen Abtastzeitpunkt, der an die aktuelle Zeit angrenzt, erhalten wird;

Erfassen einer ersten Nutzungsrate der spezifizierten Hardwarevorrichtung des Servers mit dem zum aktuellen Zeitpunkt größten Temperaturwert, wobei die erste Nutzungsrate spezifisch für die zum Migrieren bestimmte virtuelle Maschine ist und die erste Nutzungsrate zu dem zum aktuellen Zeitpunkt benachbarten vorherigen Abtastzeitpunkt erfasst wird;

Erfassen des ersten Gesamtspeicherplatzes des Servers mit dem zum aktuellen Zeitpunkt größten Temperaturwert und Erfassen des zweiten Gesamtspeicherplatzes des ersten Servers;

Erfassen einer fünften Nutzungsrate einer spezifizierten Hardwarevorrichtung des ersten Servers, wobei die fünfte Nutzungsrate zu jedem Abtastzeitpunkt, der vor der aktuellen Zeit und in der ersten spezifizierten Zeitspanne liegt, gesammelt wird;

Erhalten eines fünften Produkts durch Multiplizieren der erfassten vierten Luftaustrittstemperatur mit dem bestimmten gewichteten Wert der ersten Luftaustrittstemperatur;

Erhalten eines sechsten Produkts durch Multiplizieren der erfassten dritten Lufteintrittstemperatur mit dem bestimmten gewichteten Wert der ersten Lufteintrittstemperatur;

Erhalten eines siebten Produkts durch Multiplizieren eines Produkts aus der erfassten ersten Nutzungsrate und dem bestimmten gewichteten Wert der ersten Nutzungsrate mit einem Verhältnis des erfassten zweiten gesamten Speicherplatzes zu dem ersten gesamten Speicherplatz;

Erhalten eines achten Produkts durch Multiplizieren der erfassten fünften Nutzungsrate mit dem bestimmten gewichteten Wert der zweiten Nutzungsrate; und

Hinzufügen des fünften Produkts, des sechsten Produkts, des siebten Produkts, des achten Produkts und des bestimmten Umgebungstemperaturwertes und Verwenden der durch das Hinzufügen erhaltenen Summe als vorhergesagter Temperaturwert des ersten Servers, der verfügbar ist, nachdem die bestimmte zu migrierende virtuelle Maschine auf den ersten Server migriert wurde.

7.  Verfahren nach Anspruch 1, wobei das Vorhersagen eines Temperaturwertes des Servers mit dem zum aktuellen Zeitpunkt größten Temperaturwert nach dem Migrieren der zum Migrieren bestimmten virtuellen Maschine auf den ersten Server umfasst:

Erfassen der ersten Luftaustrittstemperatur, die durch Sammeln der Temperatur am Luftaustritt des Servers mit dem zum aktuellen Zeitpunkt größten Temperaturwert am vorherigen Abtastzeitpunkt angrenzend an die aktuelle Zeit erhalten wurde;
Erfassen der ersten Lufteintrittstemperatur, die durch Sammeln der Temperatur am Lufteintritt des Servers mit dem zum aktuellen Zeitpunkt größten Temperaturwert am vorherigen Abtastzeitpunkt angrenzend an die aktuelle Zeit erhalten wurde;
Erfassen der ersten Nutzungsrate der spezifizierten Hardwarevorrichtung des Servers mit dem zum aktuellen Zeitpunkt größten Temperaturwert, wobei die erste Nutzungsrate spezifisch für die zu migrierende bestimmte virtuelle Maschine ist und die erste Nutzungsrate zu dem zum aktuellen Zeitpunkt benachbarten vorherigen Abtastzeitpunkt gesammelt wird;
Erfassen der zweiten Nutzungsrate der spezifizierten Hardwarevorrichtung des Servers mit dem zum aktuellen Zeitpunkt größten Temperaturwert, wobei die zweite Nutzungsrate zu jedem Abtastzeitpunkt, der vor der aktuellen Zeit und in der ersten spezifizierten Zeitspanne liegt, gesammelt wird;
Erhalten des ersten Produkts durch Multiplizieren der erfassten ersten Luftaustrittstemperatur mit dem gewichteten Wert der ersten Luftaustrittstemperatur;
Erhalten des zweiten Produkts durch Multiplizieren der erfassten ersten Lufteintrittstemperatur mit dem gewichteten Wert der ersten Lufteintrittstemperatur;
Erhalten des dritten Produkts durch Multiplizieren der erfassten ersten Nutzungsrate mit dem gewichteten Wert der ersten Nutzungsrate;
Erhalten des vierten Produkts durch Multiplizieren der erfassten zweiten Nutzungsrate mit dem gewichteten Wert der zweiten Nutzungsrate; und
Hinzufügen des ersten Produkts, des zweiten Produkts, des dritten Produkts, des vierten Produkts, und des Umgebungstemperaturwerts und Verwenden der Summe, die durch das Hinzufügen als vorhergesagter Temperaturwert des Servers mit dem zum aktuellen Zeitpunkt größten Temperaturwert erhalten wurde, nachdem die bestimmte zu migrierende virtuelle Maschine von dem Server mit dem zum aktuellen Zeitpunkt größten Temperaturwert zu dem ersten Server migriert wurde.

8.  Vorrichtung zum Migrieren einer virtuellen Maschine (300), umfassend:

eine Erfassungseinheit (30), die zum Erfassen eines Temperaturwerts jedes Servers in einem Rechenzentrum zu einem aktuellen Zeitpunkt ausgelegt ist;
eine Recheneinheit (31), die zum Bestimmen eines größten Temperaturwerts und eines kleinsten Temperaturwerts aus den erfassten Temperaturwerten der Server in dem Rechenzentrum und zum Berechnen einer Differenz zwischen dem größten Temperaturwert und dem kleinsten Temperaturwert ausgelegt ist;
eine Bestimmungseinheit (32), die zum Bestimmen einer zum Migrieren bestimmten virtuellen Maschine von einem Server mit dem zum aktuellen Zeitpunkt größten Temperaturwert ausgelegt ist, wenn bestimmt wird, dass die Differenz einen vorgegebenen Schwellenwert erreicht, wobei der vorgegebene Schwellenwert größer als 0 ist;
**dadurch gekennzeichnet, dass** die Vorrichtung ferner umfasst:
eine Auswahleinheit (33), die ausgelegt ist, zum:

Auswählen eines Servers aus den anderen Servern, die im Rechenzentrum umfasst sind, mit Ausnahme des Servers mit dem zum aktuellen Zeitpunkt größten Temperaturwert, durch Screening eines Servers, der keine virtuelle Maschine umfasst, die mit der zum Migrieren bestimmten virtuellen Maschine übereinstimmt, und/oder Auswählen durch Screening eines Servers, der eine ungenutzte Ressource aufweist und einen Ressourcenbedarf der bestimmten zum Migrieren bestimmten virtuellen Maschine erfüllt;
Durchführen der folgenden Schritte, die auf einem ersten Server durchgeführt werden, auf jedem Server in den ausgewählten Servern, wobei der erste Server ein beliebiger Server in den ausgewählten Servern ist:

Vorhersagen von Temperaturwerten des ersten Servers und des Servers mit dem zum aktuellen Zeitpunkt größten Temperaturwert, nachdem die bestimmte zu migrierende virtuelle Maschine auf den ersten Server migriert wurde;

Berechnen einer Differenz zwischen einem größten Temperaturwert und einem kleinsten Temperaturwert in den folgenden Temperaturwerten: dem vorhergesagten Temperaturwert des ersten Servers und dem vorhergesagten Temperaturwert des Servers mit dem zum aktuellen Zeitpunkt größten Temperaturwert, nachdem die bestimmte zu migrierende virtuelle Maschine auf den ersten Server migriert wurde, und gemessenen Temperaturwerten, die durch separates Messen anderer Server im Rechenzentrum mit Ausnahme des ersten Servers und des Servers mit dem zum aktuellen Zeitpunkt größten Temperaturwert erhalten wurden; und

Bestimmen eines Servers, der einer kleinsten Differenz entspricht, aus einer berechneten Differenz, die jedem Server in den ausgewählten Servern entspricht, als ausgewählter Zielserver, wobei der ausgewählte Zielserver die folgende Bedingung erfüllt: nachdem die bestimmte zu migrierende virtuelle Maschine auf den Zielserver migriert wurde, ist ein Temperaturwert des Zielservers kleiner als der größte Temperaturwert; und

eine Migrationseinheit (34), die zum Migrieren der bestimmten zum Migrieren bestimmten virtuellen Maschine zu dem Zielserver ausgelegt ist.

**9.** Vorrichtung (300) nach Anspruch 8,
wobei beim Bestimmen der zum Migrieren bestimmten virtuellen Maschine von dem Server mit dem zum aktuellen Zeitpunkt größten Temperaturwert die Bestimmungseinheit (32) insbesondere ausgelegt ist zum:

Berechnen eines Wertes des auf den Server mit dem größten Temperaturwert zum aktuellen Zeitpunkt ausgeübten Temperatureinflusses durch jede virtuelle Maschine im Server mit dem zum aktuellen Zeitpunkt größten Temperaturwert, wobei der Wert des Temperatureinflusses, der auf den Server mit dem zum aktuellen Zeitpunkt größten Temperaturwert durch jede virtuelle Maschine ausgeübt wird, eine Temperaturwertänderung des Servers mit dem zum aktuellen Zeitpunkt größten Temperaturwert ist, wenn jede virtuelle Maschine im Server mit dem zum aktuellen Zeitpunkt größten Temperaturwert läuft;

Bestimmen eines größten Wertes des Temperatureinflusses aus den berechneten Werten des Temperatureinflusses, der auf den Server mit dem zum aktuellen Zeitpunkt größten Temperaturwert ausgeübt wird, getrennt durch alle virtuellen Maschinen; und

Verwenden einer virtuellen Maschine mit dem bestimmten größten Wert des Temperatureinflusses als der bestimmten zum Migrieren bestimmten virtuellen Maschine.

**10.** Vorrichtung (300) nach Anspruch 9, wobei bei der Berechnung des Wertes des Temperatureinflusses, der auf den Server mit dem zum aktuellen Zeitpunkt größten Temperaturwert ausgeübt wird, durch jede virtuelle Maschine in dem Server mit dem zum aktuellen Zeitpunkt größten Temperaturwert, die Bestimmungseinheit (32) speziell ausgelegt ist zum:

Erfassen einer ersten Luftaustrittstemperatur, die durch Sammeln der Temperatur an einem Luftaustritt des Servers mit dem zum aktuellen Zeitpunkt größten Temperaturwert an einem vorhergehenden Abtastzeitpunkt angrenzend an die aktuelle Zeit erhalten wird, und einer ersten Lufteintrittstemperatur, die durch Sammeln der Temperatur an einem Lufteintritt des Servers mit dem größten Temperaturwert an dem zum aktuellen Zeitpunkt benachbarten vorhergehenden Abtastzeitpunkt erhalten wird;

Erfassen einer ersten Nutzungsrate einer spezifizierten Hardwarevorrichtung des Servers mit dem zum aktuellen Zeitpunkt größten Temperaturwert, wobei die erste Nutzungsrate für jede virtuelle Maschine im Server mit dem zum aktuellen Zeitpunkt größten Temperaturwert spezifisch ist, die erste Nutzungsrate zu dem zum aktuellen Zeitpunkt benachbarten vorherigen Abtastzeitpunkt gesammelt wird und die spezifizierte Hardwarevorrichtung ein Attribut aufweist, dass Wärme erzeugt wird und sich die erzeugte Wärme mit der Belastung der spezifizierten Hardwarevorrichtung ändert;

Erfassen einer zweiten Nutzungsrate der spezifizierten Hardwarevorrichtung des Servers mit dem zum aktuellen Zeitpunkt größten Temperaturwert, wobei die zweite Nutzungsrate zu jedem Abtastzeitpunkt in einer ersten spezifizierten Zeitspanne vor der aktuellen Zeit gesammelt wird; basierend auf der ersten Luftaustrittstemperatur, der ersten Lufteintrittstemperatur, der ersten Nutzungsrate und der zweiten Nutzungsrate, die erfasst werden, und ein gewichteter Wert der ersten Luftaustrittstemperatur, ein gewichteter Wert der ersten Lufteintrittstemperatur, ein gewichteter Wert der ersten Nutzungsrate, ein gewichteter Wert der zweiten Nutzungsrate, und einen Umgebungstemperaturwert, die bestimmt werden, unter Verwendung einer gewichteten Summierungsweise einen Temperaturwert des Servers mit dem zur aktuellen Zeit größten verfügbaren Temperaturwert Vorhersagen, der nach dem jede virtuelle Maschine in dem Server mit dem zum aktuellen Zeitpunkt größten Temperaturwert aus dem Server mit dem zum aktuellen Zeitpunkt größten Temperaturwert heraus migriert wurde; und

Durchführen des folgenden Schrittes, der auf einer ersten virtuellen Maschine durchgeführt wird, auf jeder virtuellen Maschine im Server mit dem zum aktuellen Zeitpunkt größten Temperaturwert, wobei die erste virtuelle Maschine eine beliebige virtuelle Maschine in allen virtuellen Maschinen im Server mit dem zum aktuellen Zeitpunkt größten Temperaturwert ist;

Verwenden eines Absolutwertes einer Temperaturdifferenz zwischen einem vorhergesagten Temperaturwert und der erfassten ersten Luftaustrittstemperatur als Wert des Temperatureinflusses, der von der ersten virtuellen Maschine auf den Server mit dem zum aktuellen Zeitpunkt größten Temperaturwert ausgeübt wird, wobei der vorhergesagte Temperaturwert ein Temperaturwert des Servers mit dem zum aktuellen Zeitpunkt größten Temperaturwert ist, nachdem die erste virtuelle Maschine aus dem Server mit dem zum aktuellen Zeitpunkt größten Temperaturwert migriert wurde.

11. Vorrichtung (300) nach Anspruch 10, wobei bei der Vorhersage, unter Verwendung der gewichteten Summierungsweise, der Temperaturwert des Servers mit dem zum aktuellen Zeitpunkt größten Temperaturwert nachdem jede virtuelle Maschine in dem Server mit dem zum aktuellen Zeitpunkt größten Temperaturwert aus dem Server mit dem zum aktuellen Zeitpunkt größten Temperaturwert migriert wurde, verfügbar ist, die Bestimmungseinheit (32) insbesondere ausgelegt ist zum:

Durchführen der folgenden Schritte, die auf der ersten virtuellen Maschine durchgeführt werden, auf jeder virtuellen Maschine auf dem Server mit dem zum aktuellen Zeitpunkt größten Temperaturwert:

Erhalten eines ersten Produkts durch Multiplizieren der erfassten ersten Luftaustrittstemperatur mit dem bestimmten gewichteten Wert der ersten Luftaustrittstemperatur;

Erhalten eines zweiten Produkts durch Multiplizieren der erfassten ersten Lufteintrittstemperatur mit dem bestimmten gewichteten Wert der ersten Lufteintrittstemperatur;

Erhalten eines dritten Produkts durch Multiplizieren der erworbenen ersten Nutzungsrate mit dem bestimmten gewichteten Wert der ersten Nutzungsrate;

Erhalten eines vierten Produkts durch Multiplizieren der erfassten zweiten Nutzungsrate mit dem bestimmten gewichteten Wert der zweiten Nutzungsrate; und

Hinzufügen des ersten Produkts, des zweiten Produkts, des dritten Produkts, des vierten Produkts und des bestimmten Umgebungstemperaturwerts und Verwenden der Summe, die durch das Hinzufügen als Temperaturwert des Servers mit dem größten Temperaturwert zum aktuellen Zeitpunkt erhalten wird, nachdem die erste virtuelle Maschine aus dem Server mit dem zum aktuellen Zeitpunkt größten Temperaturwert heraus migriert wurde.

12. Vorrichtung (300) nach Anspruch 10 oder 11, wobei bei der Bestimmung des gewichteten Wertes der ersten Luftaustrittstemperatur, des gewichteten Wertes der ersten Lufteintrittstemperatur, des gewichteten Wertes der ersten Nutzungsrate, des gewichteten Wertes der zweiten Nutzungsrate und des Umgebungstemperaturwertes die Bestimmungseinheit (32) insbesondere ausgelegt ist zum:

Erfassen einer zweiten Luftaustrittstemperatur, die durch Sammeln der Temperatur am Luftaustritt des Servers mit dem zum aktuellen Zeitpunkt größten Temperaturwert zu jedem Abtastzeitpunkt in einer Zeitspanne vor der aktuellen Zeit erhalten wurde;

Erfassen einer dritten Luftaustrittstemperatur, die durch Sammeln der Temperatur am Luftaustritt des Servers mit dem zum aktuellen Zeitpunkt größten Temperaturwert zu einem bestimmten Zeitpunkt erhalten wird, der jedem Abtastzeitpunkt entspricht;

Erfassen einer zweiten Lufteintrittstemperatur, die durch Sammeln der Temperatur am Lufteintritt des Servers mit dem zum aktuellen Zeitpunkt größten Temperaturwert zu dem bestimmten Zeitpunkt erhalten wird, der jedem Abtastzeitpunkt entspricht;

Erfassen einer dritten Nutzungsrate der spezifizierten Hardwarevorrichtung des Servers mit dem zum aktuellen Zeitpunkt größten Temperaturwert, wobei die dritte Nutzungsrate für jede virtuelle Maschine in dem Server mit dem zum aktuellen Zeitpunkt größten Temperaturwert spezifisch ist, und die dritte Nutzungsrate zu dem zum jeweiligen Abtastzeitpunkt spezifizierten Zeitpunkt gesammelt wird;

Erfassen einer vierten Nutzungsrate der spezifizierten Hardwarevorrichtung des Servers mit dem zum aktuellen Zeitpunkt größten Temperaturwert, wobei die vierte Nutzungsrate in einer zweiten spezifizierten Zeitspanne gesammelt wird, die jedem Abtastzeitpunkt entspricht; und

Verwenden der erfassten zweiten Luftaustrittstemperatur als abhängige Variable, getrennt unter Verwendung der erfassten dritten Luftaustrittstemperatur, der zweiten Lufteintrittstemperatur, der dritten Nutzungsrate und der vierten Nutzungsrate als unabhängige Variable, und Bestimmen unter Anwendung der gewichteten Summierungsweise des gewichteten Wertes der ersten Luftaustrittstemperatur, des gewichteten Wertes der ersten Lufteintrittstemperatur, des gewichteten Wertes der ersten Nutzungsrate, des gewichteten Wertes der zweiten Nutzungsrate und des Umgebungstemperaturwertes, wobei:

der spezifizierte Zeitpunkt, der einem beliebigen Abtastzeitpunkt entspricht, vor dem beliebigen Abtastzeitpunkt liegt, und die Zeitspanne zwischen dem spezifizierten Zeitpunkt, der dem beliebigen Abtastzeitpunkt entspricht, und dem beliebigen Abtastzeitpunkt gleich der Zeitspanne zwischen dem aktuellen Zeitpunkt und einem festgelegten Vorhersagezeitpunkt ist; und die zweite spezifizierte Zeitspanne, die dem beliebigen Abtastzeitpunkt entspricht, ist eine Zeitspanne, die dem spezifizierten Zeitpunkt, der dem beliebigen Abtastzeitpunkt entspricht, und einer beliebigen Zeitspanne außerhalb des entsprechenden spezifizierten Zeitpunkts voraus liegt.

13. Vorrichtung (300) nach Anspruch 8, wobei bei der Vorhersage des Temperaturwerts des ersten Servers, der nach der Migration der zum Migrieren bestimmten virtuellen Maschine auf den ersten Server verfügbar ist, die Auswahleinheit (33) insbesondere ausgelegt ist zum

Erfassen der vierten Luftaustrittstemperatur, die durch das Sammeln der Temperatur an einem Luftaustritt des ersten Servers zu dem vorherigen Abtastzeitpunkt, der an die aktuelle Zeit angrenzt, erhalten wird;

Erfassen einer dritten Lufteintrittstemperatur, die durch Sammeln der Temperatur an einem Lufteintritt des ersten Servers zu dem vorherigen Abtastzeitpunkt, der an die aktuelle Zeit angrenzt, erhalten wird;

Erfassen einer ersten Nutzungsrate der spezifizierten Hardwarevorrichtung des Servers mit dem zum aktuellen Zeitpunkt größten Temperaturwert, wobei die erste Nutzungsrate spezifisch für die zum Migrieren bestimmte virtuelle Maschine ist und die erste Nutzungsrate zu dem zum aktuellen Zeitpunkt benachbarten vorherigen Abtastzeitpunkt gesammelt wird;

Erfassen des ersten Gesamtspeicherplatzes des Servers mit dem zum aktuellen Zeitpunkt größten Temperaturwert und Erfassen des zweiten Gesamtspeicherplatzes des ersten Servers;

Erfassen einer fünften Nutzungsrate einer spezifizierten Hardwarevorrichtung des ersten Servers, wobei die fünfte Nutzungsrate zu jedem Abtastzeitpunkt, der vor der aktuellen Zeit und in der ersten spezifizierten Zeitspanne liegt, gesammelt wird;

Erhalten eines fünften Produkts durch Multiplizieren der erfassten vierten Luftaustrittstemperatur mit dem bestimmten gewichteten Wert der ersten Luftaustrittstemperatur;

Erhalten eines sechsten Produkts durch Multiplizieren der erfassten dritten Lufteintrittstemperatur mit dem bestimmten gewichteten Wert der ersten Lufteintrittstemperatur;

Erhalten eines siebten Produkts durch Multiplizieren eines Produkts aus der erfassten ersten Nutzungsrate und dem bestimmten gewichteten Wert der ersten Nutzungsrate mit einem Verhältnis des erfassten zweiten gesamten Speicherplatzes zu dem ersten gesamten Speicherplatz;

Erhalten eines achten Produkts durch Multiplizieren der erfassten fünften Nutzungsrate mit dem bestimmten gewichteten Wert der zweiten Nutzungsrate; und Hinzufügen des fünften Produkts, des sechsten Produkts, des siebten Produkts, des achten Produkts und des bestimmten Umgebungstemperaturwertes und Verwenden der durch das Hinzufügen erhaltenen Summe als vorhergesagter Temperaturwert des ersten Servers, der verfügbar ist, nachdem die bestimmte zu migrierende virtuelle Maschine auf den ersten Server migriert wurde.

14. Vorrichtung (300) nach Anspruch 8, wobei bei der Vorhersage des Temperaturwertes des Servers mit dem zum aktuellen Zeitpunkt größten Temperaturwert, nachdem die bestimmte zu migrierende virtuelle Maschine auf den ersten Server migriert wurde, die Auswahleinheit (33) insbesondere ausgelegt ist zum:

Erfassen der ersten Luftaustrittstemperatur, die durch Sammeln der Temperatur am Luftaustritt des Servers mit dem zum aktuellen Zeitpunkt größten Temperaturwert am vorherigen Abtastzeitpunkt angrenzend an die aktuelle Zeit erhalten wurde;

Erfassen der ersten Lufteintrittstemperatur, die durch Sammeln der Temperatur am Lufteintritt des Servers mit dem zum aktuellen Zeitpunkt größten Temperaturwert am vorherigen Abtastzeitpunkt angrenzend an die aktuelle Zeit erhalten wurde;

Erfassen der ersten Nutzungsrate der spezifizierten Hardwarevorrichtung des Servers mit dem zum aktuellen Zeitpunkt größten Temperaturwert, wobei die erste Nutzungsrate spezifisch für die zum Migrieren bestimmte virtuelle Maschine ist und die erste Nutzungsrate zu dem zum aktuellen Zeitpunkt benachbarten vorherigen Abtastzeitpunkt gesammelt wird;

Erfassen der zweiten Nutzungsrate der spezifizierten Hardwarevorrichtung des Servers mit dem zum aktuellen Zeitpunkt größten Temperaturwert, wobei die zweite Nutzungsrate zu jedem Abtastzeitpunkt, der vor der aktuellen Zeit und in der ersten spezifizierten Zeitspanne liegt, gesammelt wird;

Erhalten des ersten Produkts durch Multiplizieren der erfassten ersten Luftaustrittstemperatur mit dem gewichteten Wert der ersten Luftaustrittstemperatur;

Erhalten des zweiten Produkts durch Multiplizieren der erfassten ersten Lufteintrittstemperatur mit dem gewichteten Wert der ersten Lufteintrittstemperatur;

Erhalten des dritten Produkts durch Multiplizieren der erfassten ersten Nutzungsrate mit dem gewichteten Wert der ersten Nutzungsrate;

Erhalten des vierten Produkts durch Multiplizieren der erfassten zweiten Nutzungsrate mit dem bestimmten gewichteten Wert der zweiten Nutzungsrate; und

Hinzufügen des ersten Produkts, des zweiten Produkts, des dritten Produkts, des vierten Produkts, des vierten Produkts und des Umgebungstemperaturwerts und Verwenden der Summe, die durch das Hinzufügen als vorhergesagter Temperaturwert des Servers mit dem zum aktuellen Zeitpunkt größten Temperaturwert erhalten wurde, nachdem die bestimmte zu migrierende virtuelle Maschine von dem Server mit dem zum aktuellen Zeitpunkt größten Temperaturwert zu dem ersten Server migriert wurde.

**15.** System zum Migrieren einer virtuellen Maschine (400), umfassend ein Rechenzentrum (310), wobei das Rechenzentrum (310) mindestens einen Server (3100) umfasst, wobei jeder Server (3100) mindestens eine virtuelle Maschine (3110) umfasst; und ferner umfassend die Vorrichtung (300) zum Migrieren einer virtuellen Maschine nach einem der Ansprüche 8 bis 14.

**Revendications**

**1.** Procédé pour faire migrer une machine virtuelle, consistant :

à acquérir (100) une valeur de température de chaque serveur dans un centre de données à un instant actuel ;
à déterminer (110) la valeur de température la plus importante et la valeur de température la plus petite à partir des valeurs de température acquises des serveurs dans le centre de données et à calculer une différence entre la valeur de température la plus importante et la valeur de température la plus petite ;
lorsqu'il est déterminé que la différence atteint un seuil prédéfini, à déterminer (120) une machine virtuelle à faire migrer à partir d'un serveur ayant la valeur de température la plus importante à l'instant actuel, dans lequel le seuil prédéfini est supérieur à 0 ;
**caractérisé en ce que** le procédé consiste en outre :

à partir des autres serveurs qui sont inclus dans le centre de données, à l'exception du serveur ayant la valeur de température la plus importante à l'instant actuel, à sélectionner, au moyen d'un filtrage, un serveur qui ne comprend pas une machine virtuelle mutuellement exclusive avec la machine virtuelle à faire migrer déterminée et/ou à sélectionner, au moyen d'un filtrage, un serveur qui présente une ressource inactive et répond à une exigence de ressource de la machine virtuelle à faire migrer déterminée ;
à effectuer les étapes suivantes, qui sont effectuées sur un premier serveur, sur chaque serveur dans des serveurs sélectionnés, dans lequel le premier serveur est n'importe quel serveur dans les serveurs sélectionnés ;
à prédire des valeurs de température du premier serveur et du serveur ayant la valeur de température la plus importante à l'instant actuel après que la machine virtuelle à faire migrer déterminée est migrée vers le premier serveur ;
à calculer une différence entre la valeur de température la plus importante et la valeur de température la plus petite dans les valeurs de température suivantes : la valeur de température prédite du premier serveur et la valeur de température prédite du serveur ayant la valeur de température la plus importante à l'instant actuel après que la machine virtuelle à faire migrer déterminée est migrée vers le premier serveur, et des valeurs de température mesurées obtenues en mesurant de manière distincte d'autres serveurs dans le centre de données, à l'exception du premier serveur et du serveur ayant la valeur de température la plus importante à l'instant actuel ;
à déterminer un serveur correspondant à la différence la plus petite, à partir d'une différence calculée correspondant à chaque serveur dans les serveurs sélectionnés, en tant que serveur de destination sélectionné, dans lequel le serveur de destination sélectionné remplit la condition suivante : après que la machine virtuelle à faire migrer déterminée est migrée vers le serveur de destination, une valeur de température du serveur de destination est inférieure à la valeur de température la plus importante ; et
à faire migrer (140) la machine virtuelle à faire migrer déterminée vers le serveur de destination.

**2.** Procédé selon la revendication 1, dans lequel la détermination (120) d'une machine virtuelle à faire migrer à partir d'un serveur ayant la valeur de température la plus importante à l'instant actuel consiste spécialement :

à calculer une valeur d'un effet de température exercé sur le serveur ayant la valeur de température la plus importante à l'instant actuel par chaque machine virtuelle dans le serveur ayant la valeur de température la plus importante à l'instant actuel, dans lequel la valeur d'un effet de température exercé sur le serveur ayant la valeur de température la plus importante à l'instant actuel par chaque machine virtuelle est une variation de valeur de température du serveur ayant la valeur de température la plus importante à l'instant actuel lorsque chaque machine virtuelle fonctionne dans le serveur ayant la valeur de température plus importante à l'instant actuel ;

à déterminer la valeur la plus importante d'un effet de température à partir des valeurs calculées d'un effet de température exercé sur le serveur ayant la valeur de température la plus importante à l'instant actuel de manière distincte par toutes les machines virtuelles ; et

à utiliser une machine virtuelle ayant la valeur la plus importante d'un effet de température comme machine virtuelle à faire migrer déterminée.

**3.** Procédé selon la revendication 2, dans lequel le calcul d'une valeur d'un effet de température exercé sur le serveur ayant la valeur de température la plus importante à l'instant actuel par chaque machine virtuelle dans le serveur ayant la valeur de température la plus importante à l'instant actuel consiste :

à acquérir une première température de sortie d'air obtenue en collectant, à un précédent instant d'échantillonnage adjacent à l'instant actuel, une température au niveau d'une sortie d'air du serveur ayant la valeur de température la plus importante à l'instant actuel, et une première température d'entrée d'air obtenue en collectant, au précédent instant d'échantillonnage adjacent à l'instant actuel, une température au niveau d'une entrée d'air du serveur ayant la valeur de température la plus importante ;

à acquérir un premier taux d'utilisation d'un dispositif matériel spécifié du serveur ayant la valeur de température la plus importante à l'instant actuel, dans lequel le premier taux d'utilisation se réfère à un taux d'utilisation du dispositif matériel spécifié par chaque machine virtuelle dans le serveur ayant la valeur de température la plus importante à l'instant actuel, le premier taux d'utilisation est collecté au précédent instant d'échantillonnage adjacent à l'instant actuel et le dispositif matériel spécifié comporte un attribut lorsque de la chaleur est générée et la chaleur générée change avec une charge du dispositif matériel spécifié ;

à acquérir un deuxième taux d'utilisation du dispositif matériel spécifié du serveur ayant la valeur de température la plus importante à l'instant actuel, dans lequel le deuxième taux d'utilisation est collecté à chaque instant d'échantillonnage qui précède l'instant actuel et pendant une première durée spécifiée à partir de l'instant actuel ;

en se basant sur la première température de sortie d'air, sur la première température d'entrée d'air, sur le premier taux d'utilisation et sur le deuxième taux d'utilisation qui sont acquis, et sur une valeur pondérée de la première température de sortie d'air, sur une valeur pondérée de la première température d'entrée d'air, sur une valeur pondérée du premier taux d'utilisation, sur une valeur pondérée du deuxième taux d'utilisation et sur une valeur de température ambiante qui sont déterminées, à prédire, en utilisant une manière de sommation pondérée, une valeur de température du serveur ayant la valeur de température la plus importante à l'instant actuel disponible après que chaque machine virtuelle dans le serveur ayant la valeur de température la plus importante à l'instant actuel est migrée hors du serveur ayant la valeur de température la plus importante à l'instant actuel ; et

à effectuer l'étape suivante, qui est effectuée sur une première machine virtuelle, sur chaque machine virtuelle dans le serveur ayant la valeur de température la plus importante à l'instant actuel, dans lequel la première machine virtuelle est n'importe quelle machine virtuelle dans toutes les machines virtuelles dans le serveur ayant la valeur de température la plus importante à l'instant actuel ;

à utiliser une valeur absolue d'une différence de température entre une valeur de température prédite et la première température de sortie d'air acquise comme valeur d'un effet de température exercé sur le serveur ayant la valeur de température la plus importante à l'instant actuel par la première machine virtuelle, dans lequel la valeur de température prédite est une valeur de température du serveur ayant la valeur de température la plus importante à l'instant actuel après que la première machine virtuelle est migrée hors du serveur ayant la valeur de température la plus importante à l'instant actuel.

**4.** Procédé selon la revendication 3, dans lequel la prédiction, en utilisant une manière de sommation pondérée, d'une valeur de température du serveur ayant la valeur de température la plus importante à l'instant actuel disponible après que chaque machine virtuelle dans le serveur ayant la valeur de température la plus importante à l'instant actuel est migrée hors du serveur ayant la valeur de température la plus importante à l'instant actuel, consiste :

à effectuer les étapes suivantes, qui sont effectuées sur la première machine virtuelle, sur chaque machine virtuelle dans le serveur ayant la valeur de température la plus importante à l'instant actuel ;

à obtenir un premier produit en multipliant la première température de sortie d'air acquise par la valeur pondérée déterminée de la première température de sortie d'air ;

à obtenir un deuxième produit en multipliant la première température d'entrée d'air acquise par la valeur pondérée déterminée de la première température d'entrée d'air ;

à obtenir un troisième produit en multipliant le premier taux d'utilisation acquis par la valeur pondérée déterminée du premier taux d'utilisation ;

à obtenir un quatrième produit en multipliant le deuxième taux d'utilisation acquis par la valeur pondérée déterminée du deuxième taux d'utilisation ; et

à ajouter le premier produit, le deuxième produit, le troisième produit, le quatrième produit et la valeur de température ambiante déterminée et à utiliser la somme obtenue par l'addition comme valeur de température du serveur ayant la valeur de température la plus importante à l'instant actuel après que la première machine virtuelle est migrée hors du serveur ayant la valeur de température la plus importante à l'instant actuel.

5. Procédé selon la revendication 3 ou 4, dans lequel la détermination d'une valeur pondérée de la première température de sortie d'air, d'une valeur pondérée de la première température d'entrée d'air, d'une valeur pondérée du premier taux d'utilisation, d'une valeur pondérée du deuxième taux d'utilisation et d'une valeur de température ambiante consiste :

à acquérir une deuxième température de sortie d'air obtenue en collectant, à chaque instant d'échantillonnage pendant une période de temps précédent l'instant actuel, la température au niveau de la sortie d'air du serveur ayant la valeur de température la plus importante à l'instant actuel ;

à acquérir une troisième température de sortie d'air en collectant, à un instant spécifié correspondant à chaque instant d'échantillonnage, la température au niveau de la sortie d'air du serveur ayant la valeur de température la plus importante à l'instant actuel ;

à acquérir une deuxième température d'entrée d'air obtenue en collectant, à l'instance spécifiée correspondant à chaque instant d'échantillonnage, la température au niveau de l'entrée d'air du serveur ayant la valeur de température la plus importante à l'instant actuel ;

à acquérir un troisième taux d'utilisation du dispositif matériel spécifié du serveur ayant la valeur de température la plus importante à l'instant actuel, dans lequel le troisième taux d'utilisation est spécifique à chaque machine virtuelle dans le serveur ayant la valeur de température la plus importante à l'instant actuel et le troisième taux d'utilisation est collecté à l'instant spécifié correspondant à chaque instant d'échantillonnage ;

à acquérir un quatrième taux d'utilisation du dispositif matériel spécifié du serveur ayant la valeur de température la plus importante à l'instant actuel, dans lequel le quatrième taux d'utilisation est collecté pendant une seconde durée spécifiée correspondant à chaque instant d'échantillonnage ; et

à utiliser la deuxième température de sortie d'air acquise comme variable dépendante, à utiliser de manière distincte la troisième température de sortie d'air acquise, la deuxième température d'entrée d'air, le troisième taux d'utilisation et le quatrième taux d'utilisation comme variables indépendantes et à déterminer, en utilisant la manière de sommation pondérée, la valeur pondérée de la première température de sortie d'air, la valeur pondérée de la première température d'entrée d'air, la valeur pondérée du premier taux d'utilisation, la valeur pondérée du deuxième taux d'utilisation et la valeur de température ambiante, dans lequel :

l'instant spécifié correspondant à n'importe quel instant d'échantillonnage précède n'importe quel instant d'échantillonnage et la durée entre l'instant spécifié correspondant à n'importe quel instant d'échantillonnage et n'importe quel instant d'échantillonnage est égale à la durée entre l'instant actuel et un instant de prédiction défini ; et la seconde durée spécifiée correspondant à n'importe quel instant d'échantillonnage est une période de temps qui précède l'instant spécifié correspondant à n'importe quel instant d'échantillonnage, et n'importe quelle durée à partir de l'instant spécifié correspondant.

6. Procédé selon la revendication 1, dans lequel la prédiction d'une valeur de température du premier serveur disponible après que la machine virtuelle à faire migrer déterminée est migrée vers le premier serveur consiste :

à acquérir une quatrième température de sortie d'air obtenue en collectant une température au niveau d'une sortie d'air du premier serveur au précédent instant d'échantillonnage adjacent à l'instant actuel ;

à acquérir une troisième température d'entrée d'air obtenue en collectant une température au niveau d'une entrée d'air du premier serveur au précédent instant d'échantillonnage adjacent à l'instant actuel ;

à acquérir un premier taux d'utilisation du dispositif matériel spécifié du serveur ayant la valeur de température la plus importante à l'instant actuel, dans lequel le premier taux d'utilisation est spécifique à la machine virtuelle à faire migrer déterminée et le premier taux d'utilisation est collecté au précédent instant d'échantillonnage adjacent à l'instant actuel ;

à acquérir un premier espace de stockage total du serveur ayant la valeur de température la plus importante à l'instant actuel et à acquérir un second espace de stockage total du premier serveur ;

à acquérir un cinquième taux d'utilisation d'un dispositif matériel spécifié du premier serveur, dans lequel le cinquième taux d'utilisation est collecté à chaque instant d'échantillonnage qui précède l'instant actuel et pendant la première durée spécifiée ;

à obtenir un cinquième produit en multipliant la quatrième température de sortie d'air acquise par la valeur pondérée déterminée de la première température de sortie d'air ;

à obtenir un sixième produit en multipliant la troisième température d'entrée d'air acquise par la valeur pondérée déterminée de la première température d'entrée d'air ;

à obtenir un septième produit en multipliant un produit du premier taux d'utilisation acquis et de la valeur pondérée déterminée du premier taux d'utilisation par un rapport entre le second espace de stockage total acquis et le premier espace de stockage total ;

à obtenir un huitième produit en multipliant le cinquième taux d'utilisation acquis par la valeur pondérée déterminée du deuxième taux d'utilisation ; et

à ajouter le cinquième produit, le sixième produit, le septième produit, le huitième produit et la valeur de température ambiante déterminée et à utiliser la somme obtenue par l'addition comme valeur de température prédite du premier serveur disponible après que la première machine virtuelle à faire migrer déterminée est migrée vers le premier serveur.

7. Procédé selon la revendication 1, dans lequel la prédiction d'une valeur de température du serveur ayant la valeur de température la plus importante à l'instant actuel après que la machine virtuelle à faire migrer déterminée est migrée vers le premier serveur consiste :

à acquérir la première température de sortie d'air obtenue en collectant, au précédent instant d'échantillonnage adjacent à l'instant actuel, la température au niveau de la sortie d'air du serveur ayant la valeur de température la plus importante à l'instant actuel ;

à acquérir la première température d'entrée d'air obtenue en collectant, au précédent instant d'échantillonnage adjacent à l'instant actuel, la température au niveau de l'entrée d'air du serveur ayant la valeur de température la plus importante à l'instant actuel ;

à acquérir le premier taux d'utilisation du dispositif matériel spécifié du serveur ayant la valeur de température la plus importante à l'instant actuel, dans lequel le premier taux d'utilisation est spécifique à la machine virtuelle à faire migrer déterminée et le premier taux d'utilisation est collecté au précédent instant d'échantillonnage adjacent à l'instant actuel ;

à acquérir le deuxième taux d'utilisation du dispositif matériel spécifié du serveur ayant la valeur de température la plus importante à l'instant actuel, dans lequel le deuxième taux d'utilisation est collecté à chaque instant d'échantillonnage qui précède l'instant actuel et pendant la première durée spécifiée ;

à obtenir le premier produit en multipliant la première température de sortie d'air acquise par la valeur pondérée de la première température de sortie d'air ;

à obtenir le deuxième produit en multipliant la première température d'entrée d'air acquise par la valeur pondérée de la première température d'entrée d'air ;

à obtenir le troisième produit en multipliant le premier taux d'utilisation acquis par la valeur pondérée du premier taux d'utilisation ;

à obtenir le quatrième produit en multipliant le deuxième taux d'utilisation acquis par la valeur pondérée du deuxième taux d'utilisation ; et

à ajouter le premier produit, le deuxième produit, le troisième produit, le quatrième produit et la valeur de température ambiante et à utiliser la somme obtenue par l'addition comme valeur de température prédite du serveur ayant la valeur de température la plus importante à l'instant actuel après que la première machine virtuelle à faire migrer déterminée est migrée hors du serveur ayant la valeur de température la plus importante à l'instant actuel.

8. Appareil pour faire migrer une machine virtuelle (300), comprenant :

une unité d'acquisition (30), configurée pour acquérir une valeur de température de chaque serveur dans un centre de données à un instant actuel ;
une unité de calcul (31), configurée : pour déterminer la valeur de température la plus importante et la valeur de température la plus petite à partir des valeurs de température acquises des serveurs dans le centre de données et pour calculer une différence entre la valeur de température la plus importante et la valeur de température la plus petite ;

une unité de détermination (32), configurée pour déterminer une machine virtuelle à faire migrer à partir d'un serveur ayant la valeur de température la plus importante à l'instant actuel lorsqu'il est déterminé que la différence atteint un seuil prédéfini, dans lequel le seuil prédéfini est supérieur à 0 ;

**caractérisé en ce que** l'appareil comprend en outre :

une unité de sélection (33), configurée :

à partir des autres serveurs qui sont inclus dans le centre de données, à l'exception du serveur ayant la valeur de température la plus importante à l'instant actuel, pour sélectionner, au moyen d'un filtrage, un serveur qui ne comprend pas une machine virtuelle mutuellement exclusive avec la machine virtuelle à faire migrer déterminée et/ou pour sélectionner, au moyen d'un filtrage, un serveur qui présente une ressource inactive et répond à une exigence de ressource de la machine virtuelle à faire migrer déterminée ;

pour effectuer les étapes suivantes, qui sont effectuées sur un premier serveur, sur chaque serveur dans des serveurs sélectionnés, dans lequel le premier serveur est n'importe quel serveur dans les serveurs sélectionnés ;

pour prédire des valeurs de température du premier serveur et du serveur ayant la valeur de température la plus importante à l'instant actuel après que la machine virtuelle à faire migrer déterminée est migrée vers le premier serveur ;

pour calculer une différence entre la valeur de température la plus importante et la valeur de température la plus petite dans les valeurs de température suivantes : la valeur de température prédite du premier serveur et la valeur de température prédite du serveur ayant la valeur de température la plus importante à l'instant actuel après que la machine virtuelle à faire migrer déterminée est migrée vers le premier serveur, et des valeurs de température mesurées obtenues en mesurant de manière distincte d'autres serveurs dans le centre de données, à l'exception du premier serveur et du serveur ayant la valeur de température la plus importante à l'instant actuel ; et

pour déterminer un serveur correspondant à la différence la plus petite, à partir d'une différence calculée correspondant à chaque serveur dans les serveurs sélectionnés, en tant que serveur de destination sélectionné, dans lequel le serveur de destination sélectionné remplit la condition suivante : après que la machine virtuelle à faire migrer déterminée est migrée vers le serveur de destination, une valeur de température du serveur de destination est inférieure à la valeur de température la plus importante ; et

une unité de migration (34), configurée pour faire migrer la machine virtuelle à faire migrer déterminée vers le serveur de destination.

9. Appareil (300) selon la revendication 8,
dans lequel, lors de la détermination de la machine virtuelle à faire migrer à partir du serveur ayant la valeur de température la plus importante à l'instant actuel, l'unité de détermination (32) est spécialement configurée :

pour calculer une valeur d'un effet de température exercé sur le serveur ayant la valeur de température la plus importante à l'instant actuel par chaque machine virtuelle dans le serveur ayant la valeur de température la plus importante à l'instant actuel, dans lequel la valeur d'un effet de température exercé sur le serveur ayant la valeur de température la plus importante à l'instant actuel par chaque machine virtuelle est une variation de valeur de température du serveur ayant la valeur de température la plus importante à l'instant actuel lorsque chaque machine virtuelle fonctionne dans le serveur ayant la valeur de température plus importante à l'instant actuel ;

pour déterminer la valeur la plus importante d'un effet de température à partir des valeurs calculées d'un effet de température exercé sur le serveur ayant la valeur de température la plus importante à l'instant actuel de manière distincte par toutes les machines virtuelles ; et

pour utiliser une machine virtuelle ayant la valeur la plus importante d'un effet de température comme machine virtuelle à faire migrer déterminée.

10. Appareil (300) selon la revendication 9, dans lequel lors du calcul de la valeur d'un effet de température exercé sur le serveur ayant la valeur de température la plus importante à l'instant actuel par chaque machine virtuelle dans le serveur ayant la valeur de température la plus importante à l'instant actuel, l'unité de détermination (32) est spécialement configurée :

pour acquérir une première température de sortie d'air obtenue en collectant, à un précédent instant d'échantillonnage adjacent à l'instant actuel, une température au niveau d'une sortie d'air du serveur ayant la valeur de température la plus importante à l'instant actuel, et une première température d'entrée d'air obtenue en collectant, au précédent instant d'échantillonnage adjacent à l'instant actuel, une température au niveau d'une entrée d'air du serveur ayant la valeur de température la plus importante ;

pour acquérir un premier taux d'utilisation d'un dispositif matériel spécifié du serveur ayant la valeur de température la plus importante à l'instant actuel, dans lequel le premier taux d'utilisation est spécifique à chaque machine virtuelle dans le serveur ayant la valeur de température la plus importante à l'instant actuel, le premier taux d'utilisation est collecté au précédent instant d'échantillonnage adjacent à l'instant actuel et le dispositif matériel spécifié comporte un attribut lorsque de la chaleur est générée et la chaleur générée change avec une charge du dispositif matériel spécifié ;

pour acquérir un deuxième taux d'utilisation du dispositif matériel spécifié du serveur ayant la valeur de température la plus importante à l'instant actuel, dans lequel, le deuxième taux d'utilisation est collecté à chaque instant d'échantillonnage pendant une première durée spécifiée qui précède l'instant actuel ;

en se basant sur la première température de sortie d'air, sur la première température d'entrée d'air, sur le premier taux d'utilisation et sur le deuxième taux d'utilisation qui sont acquis, et sur une valeur pondérée de la première température de sortie d'air, sur une valeur pondérée de la première température d'entrée d'air, sur une valeur pondérée du premier taux d'utilisation, sur une valeur pondérée du deuxième taux d'utilisation et sur une valeur de température ambiante qui sont déterminées, pour prédire, en utilisant une manière de sommation pondérée, une valeur de température du serveur ayant la valeur de température la plus importante à l'instant actuel disponible après que chaque machine virtuelle dans le serveur ayant la valeur de température la plus importante à l'instant actuel est migrée hors du serveur ayant la valeur de température la plus importante à l'instant actuel ; et

pour effectuer l'étape suivante, qui est effectuée sur une première machine virtuelle, sur chaque machine virtuelle dans le serveur ayant la valeur de température la plus importante à l'instant actuel, dans lequel la première machine virtuelle est n'importe quelle machine virtuelle dans toutes les machines virtuelles dans le serveur ayant la valeur de température la plus importante à l'instant actuel :

pour utiliser une valeur absolue d'une différence de température entre une valeur de température prédite et la première température de sortie d'air acquise comme valeur d'un effet de température exercé sur le serveur ayant la valeur de température la plus importante à l'instant actuel par la première machine virtuelle, dans lequel la valeur de température prédite est une valeur de température du serveur ayant la valeur de température la plus importante à l'instant actuel après que la première machine virtuelle est migrée hors du serveur ayant la valeur de température la plus importante à l'instant actuel.

**11.** Appareil (300) selon la revendication 10, dans lequel, lors de la prédiction, en utilisant la manière de sommation pondérée, de la valeur de température du serveur ayant la valeur de température la plus importante à l'instant actuel disponible après que chaque machine virtuelle dans le serveur ayant la valeur de température la plus importante à l'instant actuel est migrée hors du serveur ayant la valeur de température la plus importante à l'instant actuel, l'unité de détermination (32) est spécialement configurée :

pour effectuer les étapes suivantes, qui sont effectuées sur la première machine virtuelle, sur chaque machine virtuelle dans le serveur ayant la valeur de température la plus importante à l'instant actuel ;

pour obtenir un premier produit en multipliant la première température de sortie d'air acquise par la valeur pondérée déterminée de la première température de sortie d'air ;

pour obtenir un deuxième produit en multipliant la première température d'entrée d'air acquise par la valeur pondérée déterminée de la première température d'entrée d'air ;

pour obtenir un troisième produit en multipliant le premier taux d'utilisation acquis par la valeur pondérée déterminée du premier taux d'utilisation ;

pour obtenir un quatrième produit en multipliant le deuxième taux d'utilisation acquis par la valeur pondérée déterminée du deuxième taux d'utilisation ; et

pour ajouter le premier produit, le deuxième produit, le troisième produit, le quatrième produit et la valeur de température ambiante déterminée et pour utiliser la somme obtenue par l'addition comme valeur de température du serveur ayant la valeur de température la plus importante à l'instant actuel après que la première machine virtuelle est migrée hors du serveur ayant la valeur de température la plus importante à l'instant actuel.

**12.** Appareil (300) selon la revendication 10 ou 11, dans lequel, lors de la détermination de la valeur pondérée de la première température de sortie d'air, de la valeur pondérée de la première température d'entrée d'air, de la valeur pondérée du premier taux d'utilisation, de la valeur pondérée du deuxième taux d'utilisation et de la valeur de température ambiante, l'unité de détermination (32) est spécialement configurée :

pour acquérir une deuxième température de sortie d'air obtenue en collectant, à chaque instant d'échantillonnage pendant une période de temps précédent l'instant actuel, la température au niveau de la sortie d'air du serveur ayant la valeur de température la plus importante à l'instant actuel ;

pour acquérir une troisième température de sortie d'air en collectant, à un instant spécifié correspondant à chaque instant d'échantillonnage, la température au niveau de la sortie d'air du serveur ayant la valeur de température la plus importante à l'instant actuel ;

pour acquérir une deuxième température d'entrée d'air obtenue en collectant, à l'instance spécifiée correspondant à chaque instant d'échantillonnage, la température au niveau de l'entrée d'air du serveur ayant la valeur de température la plus importante à l'instant actuel ;

pour acquérir un troisième taux d'utilisation du dispositif matériel spécifié du serveur ayant la valeur de température la plus importante à l'instant actuel, dans lequel le troisième taux d'utilisation est spécifique à chaque machine virtuelle dans le serveur ayant la valeur de température la plus importante à l'instant actuel et le troisième taux d'utilisation est collecté à l'instant spécifié correspondant à chaque instant d'échantillonnage ;

pour acquérir un quatrième taux d'utilisation du dispositif matériel spécifié du serveur ayant la valeur de température la plus importante à l'instant actuel, dans lequel le quatrième taux d'utilisation est collecté pendant une seconde durée spécifiée correspondant à chaque instant d'échantillonnage ; et

pour utiliser la deuxième température de sortie d'air acquise comme variable dépendante, pour utiliser de manière distincte la troisième température de sortie d'air acquise, la deuxième température d'entrée d'air, le troisième taux d'utilisation et le quatrième taux d'utilisation comme variables indépendantes et pour déterminer, en utilisant la manière de sommation pondérée, la valeur pondérée de la première température de sortie d'air, la valeur pondérée de la première température d'entrée d'air, la valeur pondérée du premier taux d'utilisation, la valeur pondérée du deuxième taux d'utilisation et la valeur de température ambiante, dans lequel :

l'instant spécifié correspondant à n'importe quel instant d'échantillonnage précède n'importe quel instant d'échantillonnage et la durée entre l'instant spécifié correspondant à n'importe quel instant d'échantillonnage et n'importe quel instant d'échantillonnage est égale à la durée entre l'instant actuel et un instant de prédiction défini ; et la seconde durée spécifiée correspondant à n'importe quel instant d'échantillonnage est une période de temps qui précède l'instant spécifié correspondant à n'importe quel instant d'échantillonnage, et n'importe quelle durée à partir de l'instant spécifié correspondant.

13. Appareil (300) selon la revendication 8, dans lequel, lors de la prédiction de la valeur de température du premier serveur disponible après que la machine virtuelle à faire migrer est migrée vers le premier serveur, l'unité de sélection (33) est spécialement configurée :

pour acquérir une quatrième température de sortie d'air obtenue en collectant une température au niveau d'une sortie d'air du premier serveur au précédent instant d'échantillonnage adjacent à l'instant actuel ;

pour acquérir une troisième température d'entrée d'air obtenue en collectant une température au niveau d'une entrée d'air du premier serveur au précédent instant d'échantillonnage adjacent à l'instant actuel ;

pour acquérir un premier taux d'utilisation du dispositif matériel spécifié du serveur ayant la valeur de température la plus importante à l'instant actuel, dans lequel le premier taux d'utilisation est spécifique à la machine virtuelle à faire migrer déterminée et le premier taux d'utilisation est collecté au précédent instant d'échantillonnage adjacent à l'instant actuel ;

pour acquérir un premier espace de stockage total du serveur ayant la valeur de température la plus importante à l'instant actuel et pour acquérir un second espace de stockage total du premier serveur ;

pour acquérir un cinquième taux d'utilisation d'un dispositif matériel spécifié du premier serveur, dans lequel le cinquième taux d'utilisation est collecté à chaque instant d'échantillonnage qui précède l'instant actuel et pendant la première durée spécifiée ;

pour obtenir un cinquième produit en multipliant la quatrième température de sortie d'air acquise par la valeur pondérée déterminée de la première température de sortie d'air ;

pour obtenir un sixième produit en multipliant la troisième température d'entrée d'air acquise par la valeur pondérée déterminée de la première température d'entrée d'air ;

pour obtenir un septième produit en multipliant un produit du premier taux d'utilisation acquis et de la valeur pondérée déterminée du premier taux d'utilisation par un rapport entre le second espace de stockage total acquis et le premier espace de stockage total ;

pour obtenir un huitième produit en multipliant le cinquième taux d'utilisation acquis par la valeur pondérée déterminée du deuxième taux d'utilisation ; et

pour ajouter le cinquième produit, le sixième produit, le septième produit, le huitième produit et la valeur de température ambiante déterminée et pour utiliser la somme obtenue par l'addition comme valeur de température prédite du premier serveur disponible après que la première machine virtuelle à faire migrer déterminée est migrée vers le premier serveur.

**14.** Appareil (300) selon la revendication 8, dans lequel, lors de la prédiction de la valeur de température du serveur ayant la valeur de température la plus importante à l'instant actuel après que la machine virtuelle à faire migrer déterminée est migrée vers le premier serveur, l'unité de sélection (33) est spécialement configurée :

pour acquérir la première température de sortie d'air obtenue en collectant, au précédent instant d'échantillonnage adjacent à l'instant actuel, la température au niveau de la sortie d'air du serveur ayant la valeur de température la plus importante à l'instant actuel ;

pour acquérir la première température d'entrée d'air obtenue en collectant, au précédent instant d'échantillonnage adjacent à l'instant actuel, la température au niveau de l'entrée d'air du serveur ayant la valeur de température la plus importante à l'instant actuel ;

pour acquérir le premier taux d'utilisation du dispositif matériel spécifié du serveur ayant la valeur de température la plus importante à l'instant actuel, dans lequel le premier taux d'utilisation est spécifique à la machine virtuelle à faire migrer déterminée et le premier taux d'utilisation est collecté au précédent instant d'échantillonnage adjacent à l'instant actuel ;

pour acquérir le deuxième taux d'utilisation du dispositif matériel spécifié du serveur ayant la valeur de température la plus importante à l'instant actuel, dans lequel le deuxième taux d'utilisation est collecté à chaque instant d'échantillonnage qui précède l'instant actuel et pendant la première durée spécifiée ;

pour obtenir le premier produit en multipliant la première température de sortie d'air acquise par la valeur pondérée de la première température de sortie d'air ;

pour obtenir le deuxième produit en multipliant la première température d'entrée d'air acquise par la valeur pondérée de la première température d'entrée d'air ;

pour obtenir le troisième produit en multipliant le premier taux d'utilisation acquis par la valeur pondérée du premier taux d'utilisation ;

pour obtenir le quatrième produit en multipliant le deuxième taux d'utilisation acquis par la valeur pondérée du deuxième taux d'utilisation ; et

pour ajouter le premier produit, le deuxième produit, le troisième produit, le quatrième produit et la valeur de température ambiante et pour utiliser la somme obtenue par l'addition comme valeur de température prédite du serveur ayant la valeur de température la plus importante à l'instant actuel après que la première machine virtuelle à faire migrer déterminée est migrée hors du serveur ayant la valeur de température la plus importante à l'instant actuel.

**15.** Système pour faire migrer une machine virtuelle (400), comprenant un centre de données (310), dans lequel le centre de données (310) comprend au moins un serveur (3100), dans lequel chaque serveur (3100) comprend au moins une machine virtuelle (3110) ; et, en outre, comprenant l'appareil (300) pour faire migrer une machine virtuelle selon l'une quelconque des revendications 8 à 14.

Acquire a temperature value of each server in a data center at a current time                                    100

Determine a largest temperature value and a smallest temperature value from the acquired temperature values of the servers in the data center, and calculate a difference between the largest temperature value and the smallest temperature value                                    110

When it is determined that the difference reaches a preset threshold, determine a to-be-migrated virtual machine from a server with the largest temperature value at the current time, where the preset threshold is greater than or equal to 0                                    120

Select a destination server from other servers that are included in the data center except the server with the largest temperature value at the current time, where the selected destination server meets the following condition: after the determined to-be-migrated virtual machine is migrated to the destination server, a temperature value of the destination server is less than the largest temperature value                                    130

Migrate the determined to-be-migrated virtual machine to the destination server                                    140

FIG. 1

Acquire temperature values separately corresponding to server 1, server 2, …, and server 10, and obtain, by means of calculation, a difference 10°C by a largest temperature value 35°C minus a smallest temperature value 25°C ⌇200

When it is determined that the difference 10°C is greater than a preset threshold 4°C, determine a value of temperature effect exerted on server 1 by each virtual machine in 10 virtual machines in server 1 ⌇210

Determine that a value of temperature effect exerted on server 1 by virtual machine 1 is the largest, and then use virtual machine 1 as a to-be-migrated virtual machine ⌇220

Select server 10 from server 2, server 3, …, and server 10 as a destination server ⌇230

Migrate virtual machine 1 to server 10 ⌇240

FIG. 2

300

```
┌─────────────────────────────────────────────┐
│  Apparatus for migrating a virtual machine    │
│                                               │
│         ┌────────────────────┐   30           │
│         │   Acquiring unit    │                │
│         └────────────────────┘                │
│                                               │
│         ┌────────────────────┐   31           │
│         │  Calculating unit   │                │
│         └────────────────────┘                │
│                                               │
│         ┌────────────────────┐   32           │
│         │  Determining unit   │                │
│         └────────────────────┘                │
│                                               │
│         ┌────────────────────┐   33           │
│         │   Selecting unit    │                │
│         └────────────────────┘                │
│                                               │
│         ┌────────────────────┐   34           │
│         │   Migrating unit    │                │
│         └────────────────────┘                │
└─────────────────────────────────────────────┘
```

FIG. 3

400

# System for migrating a virtual machine

Apparatus 300 for migrating a virtual machine

Server 3100

Virtual machine 3110

Virtual machine 3110

Server 3100

Virtual machine 3110

Data center 310

Server 3100

Virtual machine 3110

Virtual machine 3110

Virtual machine 3110

Virtual machine 3110

Server 3100

Virtual machine 3110

Virtual machine 3110

Virtual machine 3110

FIG. 4

501

Processor

503

Memory

Program code

502

504

Communications
interface

FIG. 5

**REFERENCES CITED IN THE DESCRIPTION**

**Patent documents cited in the description**

- WO 2009126154 A1